(19) Europäisches Patentamt
European Patent Office
Office européen des brevets

(11) EP 3 764 150 A1

(12) **EUROPEAN PATENT APPLICATION**

(43) Date of publication:
**13.01.2021 Bulletin 2021/02**

(21) Application number: **20184205.1**

(22) Date of filing: **06.07.2020**

(51) Int Cl.:
***G02B 27/01*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.07.2019 JP 2019127204**
**23.10.2019 JP 2019192441**

(71) Applicant: **Ricoh Company, Ltd.**
**Tokyo 143-8555 (JP)**

(72) Inventors:
- **ICHIKAWA, Yoichi**
**Tokyo, 143-8555 (JP)**
- **KISHI, Yumiko**
**Tokyo, 143-8555 (JP)**

(74) Representative: **SSM Sandmair Patentanwälte Rechtsanwalt Partnerschaft mbB**
**Joseph-Wild-Straße 20**
**81829 München (DE)**

(54) **DISPLAY DEVICE, DISPLAY METHOD, HEAD-UP DISPLAY, AND VEHICLE**

(57) A display device (10) includes a light source (20), a light deflector (30), a light source controller (60), and a scanning controller (50). The scanning controller divides a drawing region into a plurality of small regions having a same shape and a same area, based on a resolution of an image to be formed in the drawing region; and defines a small region on a center side and a small region on an end side of the drawing region in a main scanning direction as a first small region and a second small region, respectively. The light source controller controls the light source such that intensity distributions of light irradiated to the first small region and the second small region in two-dimensional scanning are different when a brightness of the first small region and a brightness of the second small region are equal in drawing data.

FIG. 1

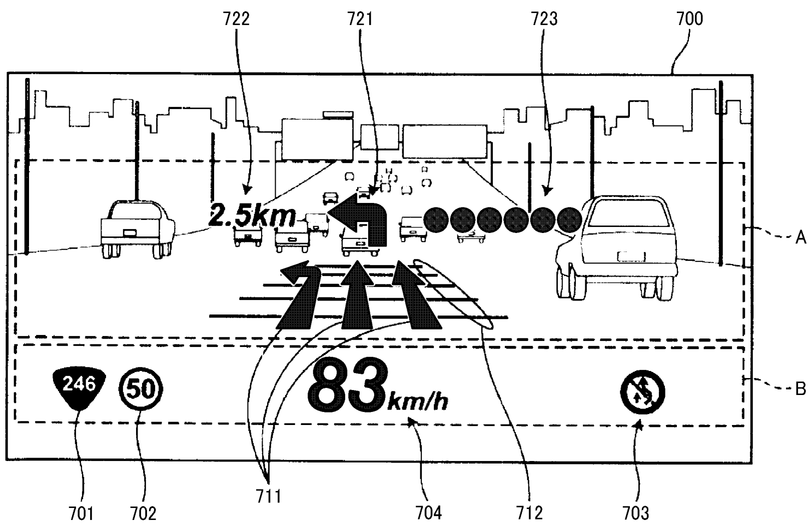




Printed by Jouve, 75001 PARIS (FR)

## Description

BACKGROUND

Technical Field

Aspects of the present disclosure relate to a display device, a display method, a head-up display, and a vehicle.

Related Art

JP-2014-095787-A discloses a control device for restraining brightness unevenness of an image projected on a screen. The control device includes a light source unit, a reflection unit, a generation unit, an adjustment unit, and a laser control unit. The light source unit irradiates a laser beam. The reflector reflects the laser beam in a predetermined direction according to the resonance frequency while changing the angle of the laser beam to scan the laser beam on the screen. The generation unit generates, based on a scanning position at which the laser beam is scanned, adjustment information for adjusting irradiation timing by delaying a first clock, which is a fixed pixel clock representing a timing of irradiation of the laser beam scanned on the screen by the reflection unit, by a delay time corresponding to the scanning position. The adjustment unit adjusts the first clock to a second clock delayed by a delay time based on the adjustment information. The laser control unit intermittently irradiates the laser beam as a pixel in synchronization with the second clock. In synchronization with the second clock, the laser control unit irradiates the laser beam at different optical powers and irradiation times for different scanning positions so that the sum of the optical powers of the laser beam is the same for each pixel projected on the screen.

However, in JP-2014-095787-A, there is room for improvement in that, even if uniform light is scanned, the light quantity distribution becomes non-uniform at end portions of the surface to be scanned in the sub-scanning direction (for example, the horizontal scanning direction in two-dimensional scanning) or in the vicinities of the end portions. More specifically, JP-2014-095787-A does not disclose that, even when uniform light is scanned, the quantity of light on the surface to be scanned periodically increases or decreases due to uneven density of scanning lines at or in the vicinities of the end portions in the sub-scanning direction. Then, on the surface to be scanned, the light becomes relatively dense and bright at folded portions where the optical scanning is alternately folded at one end and the other end in the sub-scanning direction, whereas the light becomes relatively sparse and dark in a non-folded portion. Accordingly, even if uniform light is scanned, the quantity of light on the surface to be scanned periodically increases and decreases, so that there is a concern that the light quantity distribution becomes non-uniform and the image quality deteriorates.

SUMMARY

The present invention has been made based on the above, and an object of the present invention is to provide a display device, a display method, a head-up display, and a vehicle capable of improving image quality by improving uniformity (degree of uniformity) of light quantity distribution at or in the vicinities of end portions in a sub-scanning direction (for example, a horizontal scanning direction in two-dimensional scanning) on a surface to be scanned when scanning is performed with uniform light.

In an aspect of the present disclosure, there is provided a display device that includes a light source, a light deflector, a light source controller, and a scanning controller. The light source is configured to emit light. The light deflector is configured to scan the light emitted from the light source to form an image based on drawing data in a drawing region. The light source controller is configured to control an intensity of the light emitted from the light source. The scanning controller is configured to control the light deflector. The light deflector is configured to perform two-dimensional scanning to scan the drawing region in a main scanning direction and a sub-scanning direction orthogonal to the main scanning direction. The scanning controller is configured to: fold back the two-dimensional scanning of the light deflector at end portions of the drawing region in the main scanning direction to perform a plurality of scans in the main scanning direction while changing a position in the sub-scanning direction; divide the drawing region into a plurality of small regions having a same shape and a same area, based on a resolution of the image to be formed in the drawing region; and define a small region located on a center side of the drawing region in the main scanning direction as a first small region and a small region located on an end side of the drawing region in the main scanning direction as a second small region. The light source controller is configured to control the light source such that an intensity distribution of light irradiated from the light source to the first small region and an intensity distribution of light irradiated from the light source to the second small region in the two-dimensional scanning are different from each other when a brightness of the first small region and a brightness of the second small region are equal in the drawing data.

In another aspect of the present disclosure, there is provided a display method for scanning light emitted from a light source using a light deflector to form an image based on drawing data in a drawing region. The method includes: scanning the drawing region in a main scanning direction and a sub-scanning direction orthogonal to the main scanning direction with the light deflector to perform two-dimensional scanning; folding back the two-dimensional scanning of the light deflector at end portions of the drawing region in the main scanning direction to perform a plurality of scans in the main scanning direction while changing a position in the sub-scanning direction; dividing the drawing region into a plurality of small regions having a same shape and a same area, based on a resolution of the image to be formed in the drawing region; defining a small region located on a center side of the drawing region as a first small region and a small region located on an end side of the drawing region as a second small region, and controlling the light source such that an intensity distribution of light irradiated from the light source to the first small region and an intensity distribution of light irradiated from the light source to the second small region are different from each other in the two-dimensional scanning when a brightness of the first small region and a brightness of the second small region are equal in the drawing data.

According to the present invention, there can be provided a display device, a display method, a head-up display, and a vehicle capable of improving the image quality by improving the uniformity (degree of uniformity) of the light quantity distribution at or in the vicinities of the end portions in the sub-scanning direction (for example, the horizontal scanning direction in two-dimensional scanning) on the surface to be scanned when scanning is performed with uniform light.

## BRIEF DESCRIPTION OF THE DRAWINGS

A more complete appreciation of the disclosure and many of the attendant advantages and features thereof can be readily obtained and understood from the following detailed description with reference to the accompanying drawings, wherein:

FIG. 1 is a front view illustrating an example of a virtual image displayed in a display area in an on-vehicle head-up display (HUD) so as to be superimposed on a scene in front of a vehicle viewed from a user through a front windshield;
FIG. 2 is a partially cutaway side view of the configuration of an automobile with the on-vehicle HUD;
FIG. 3 is a block diagram of an internal configuration of an optical system of the on-vehicle HUD;
FIG. 4 is a block diagram of an internal configuration of an optical system of the on-vehicle HUD;
FIG. 5 is a block diagram illustrating a schematic configuration of the on-vehicle HUD and peripheral devices of the on-vehicle HUD;
FIG. 6 is a first diagram illustrating a technical problem of a conventional HUD device;
FIG. 7 is a second diagram illustrating the technical problem of the conventional HUD device;
FIG. 8 is a third diagram illustrating the technical problem of the conventional HUD device;
FIG. 9 is a fourth diagram illustrating the technical problem of the conventional HUD device;
FIG. 10 is a fifth diagram illustrating the technical problem of the conventional HUD device;
FIG. 11 is a sixth diagram illustrating the technical problem of the conventional HUD device;
FIG. 12 is a seventh diagram illustrating the technical problem of the conventional HUD device;
FIG. 13 is an eighth diagram illustrating the technical problem of the conventional HUD device;
FIG. 14 is a ninth diagram illustrating the technical problem of the conventional HUD device;
FIG. 15 is a block diagram illustrating an example of a configuration of a display device according to an embodiment of the present invention;
FIG. 16 is a diagram illustrating an example of light quantity distributions controlled by a light source controller;
FIGS. 17A to 17C are diagrams illustrating an example of a first small region and second small regions in two-dimensional scanning;
FIG. 18 is a diagram illustrating an example of a configuration of an intermediate image screen;
FIG. 19 is a diagram illustrating an example of an intermediate image viewed from an emission side of a microlens array;
FIG. 20 is a diagram (schematic diagram) illustrating an example of a relationship between light quantity and scanning line trajectory in each microlens of the microlens array when the microlens array is scanned with uniform scanning light in order to make an entire drawing region uniform in brightness;
FIGS. 21A and 21B are diagrams illustrating an example of a case where the intensity distribution of light irradiated from a light source to each of the microlenses of the microlens array is set to be different from each other in order to make the entire drawing region uniform in brightness;
FIG. 22 is a diagram (schematic diagram) illustrating an example of a case in which the total power of light from the light source in each microlens of the microlens array is equalized;
FIG. 23 is a diagram (schematic diagram) illustrating an example of randomly changing the total power of light from the light source in each microlens of the microlens array;
FIG. 24 is a diagram illustrating a first example of a case where the intensity distribution of light from the light source in a drawing region of an intermediate image is set to be different from each other over a plurality of frames;
FIG. 25 is a diagram illustrating a second example of the case where the intensity distribution of light from the light source in a drawing region of an intermediate image is set to be different from each other over a plurality of frames;
FIG. 26 is a diagram illustrating a third example of the case where the intensity distribution of light from the light source in a drawing region of an intermediate image is set to be different from each other over a plurality of frames;
FIG. 27 is a diagram illustrating a first example of a case in which light quantity control and scanning path control are performed over a plurality of frames;

FIG. 28 is a diagram illustrating a second example of the case in which light quantity control and scanning path control are performed over a plurality of frames;

FIG. 29 is a diagram illustrating a third example of the case in which light quantity control and scanning path control are performed over a plurality of frames;

FIG. 30 is a diagram illustrating a fourth example of the case in which light quantity control and scanning path control are performed across a plurality of frames;

FIG. 31 is a diagram illustrating an example of light quantity control in unit of scanning line;

FIG. 32 is a diagram illustrating an example in which a light source controller changes the irradiation time of light from the light source to change the power of the light from the light source;

FIG. 33 is a diagram illustrating an example in which a light source controller changes the intensity of light from the light source to change the power of the light from the light source;

FIG. 34 is a block diagram of a configuration in which an estimation unit is added to the block diagram of FIG. 15;

FIG. 35 is a diagram illustrating an example of an estimation method by the estimation unit; and

FIG. 36 is a block diagram illustrating an example of a configuration of a display device in which a lookup table is provided in a light projecting unit.

The accompanying drawings are intended to depict embodiments of the present invention and should not be interpreted to limit the scope thereof. The accompanying drawings are not to be considered as drawn to scale unless explicitly noted.

DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

An example of an overall configuration of a vehicular head-up display (HUD) device to which a display device according to an embodiment of the present disclosure is applied is described with reference to FIGS. 1 to 5. Here, the display device according to the present embodiment is illustrated as a head-up display (HUD) device for vehicles (referred to as an on-vehicle HUD 1) that projects an image from the on-vehicle HUD 1 onto an observation region of an observer and displays various images as virtual images to the observer through a windshield or a combiner of a vehicle.

FIG. 1 is a front view illustrating an example of a virtual image displayed in a display area in the on-vehicle HUD 1 so as to be superimposed on a scene in front of a vehicle 301 viewed from a driver (user) 300 through a front windshield 302. FIG. 2 is a partially cutaway side view of the configuration of an automobile with the on-vehicle HUD 1. FIG. 3 is a block diagram of an internal configuration of an optical system of the on-vehicle HUD 1.

As illustrated in FIG. 2, the on-vehicle HUD 1 is installed, for example, in a dashboard of the automobile (vehicle 301) that is a mobile object (traveling object). Projection light L, which is light for projecting an image, that is emitted from the on-vehicle HUD 1 in the dashboard is reflected by the front windshield 302 that serves as a light transmission member, and is headed for the driver 300. Accordingly, the driver 300 can visually recognize a HUD display image (referred to as image or display image) such as a navigation image, which will be described later, as a virtual image. Note that a combiner that serves as a light transmission member may be disposed on the inner wall of the front windshield 302, and the driver 300 may visually recognize a virtual image formed by the projection light L that is reflected by the combiner. Note that the "image or display image" in this specification is not limited to a virtual image, and may be an image formed directly from an image to be visually recognized. That is, the "image or display image" in the present specification may be any image that can be visually recognized by the driver.

A front shooting camera 110 and an ambient light sensor (brightness detection unit) are provided on at an upper portion of the front windshield 302 on the inner side of the vehicle 301. The front shooting camera 110 shoots display information of the on-vehicle HUD 1 and a background of the display information (scenery through the front windshield 302). The ambient light sensor (brightness detection unit) 150 detects brightness and chromaticity of ambient light around the virtual image G (HUD display image). The term "lightness" herein indicates brightness, illuminance, luminous intensity, total luminous flux, and a value calculated from a result of measuring the degrees of these items.

In the on-vehicle HUD 1, the optical system or the like of the on-vehicle HUD 1 is configured such that the distance from the driver 300 to the virtual image G is four meters (m) or more. In known on-vehicle HUDs, the distance from the driver 300 to the virtual image G is about two meters. The driver 300 usually drives the automobile while observing an area from a point at infinity ahead of the vehicle to a preceding vehicle a few tens of meters ahead of the vehicle. When the driver 300 who is focusing on such a distant area attempts to visually recognize the virtual image G that is two meters ahead of the vehicle, the crystalline lenses of the eyes need to be moved widely because the focal length greatly varies. In such cases, the time required to adjust the focus of the eyes and focus on the virtual image G becomes longer, and it takes a long time to recognize the detail of the virtual image G. What is worse, the eyes of the driver 300 tend to get tired. Further, it is difficult for the driver to grasp the content of the virtual image G, and there is room for improvement from the viewpoint of appropriately providing information to the driver by the virtual image G.

If the distance to the virtual image G is equal to or longer than four meters as in the present embodiment, the amount of movement in the crystalline lenses of the eyes is reduced to a less amount of movement than in the known on-vehicle HUDs, and the time required to adjust the focus of the eyes and focus on the virtual image G becomes shorter. Accordingly, the driver 300 can recognize the detail of the virtual image G more quickly, and the possible tiredness of the eyes of the driver 300 can be reduced. Moreover, the driver 300 can more easily grasp the detail of the virtual image G, and it is easy to use the virtual image G to appropriately provide information to the driver 300. When the distance from the driver 300 to the virtual image G is equal to or greater than four meters, the driver 300 can focus on the virtual image G with almost no convergence motion in the eyes. Accordingly, the sense of distance (change in perception distance) or the depth perception (difference in perception distance), which are expected to be brought by motion parallax, can be perceived as desired in absence of the convergence motion of the eyes. As described above, according to the present embodiment, the driver perceive the information as intended in view of the sense of distance or depth perception of an image.

As illustrated in FIG. 3, the on-vehicle HUD 1 includes, in an optical system 230, laser light sources (first, second, and third laser light sources) 201R, 201G, and 201B as light sources to emit laser lights of red, green, and blue, respectively, collimator lenses 202, 203, and 204 provided for the respective laser light sources 201R, 201G, and 201B, and two dichroic mirrors 205 and 206. The on-vehicle HUD 1 further includes a light quantity adjuster 207, an optical scanner 208 as a light deflector, a free-form surface mirror 209, a microlens array (optical element array) 210 as an intermediate-image forming unit, and a projection mirror 211 as a light reflecting member. A light source unit 220 includes the laser light sources 201R, 201G, and 201B, the collimator lenses 202, 203, and 204, and the dichroic mirrors 205 and 206, which are unitized by an optical housing. Here, light sources other than the laser light sources 201R, 201G, and 201B may be used as the light sources. An optical element array other than the microlens array 210 may be used as the intermediate-image forming unit.

In the present embodiment, each of the laser beam sources 201R, 201G, and 201B is a laser diode (LD) (semiconductor laser element). The wavelength of the luminous flux emitted from the red laser light source 201R is, for example, 640 nanometers (nm), the wavelength of the luminous flux emitted from the green laser light source 201G is, for example, 530 nm, and the wavelength of the luminous flux emitted from the blue laser light source 201B is, for example, 445 nm.

The on-vehicle HUD 1 uses the free-form surface mirror 209 to project the intermediate image formed on the microlens array 210 onto the front windshield 302 of the vehicle 301, thus allowing the driver 300 to visually recognize an enlarged image of the intermediate image as the virtual image G. The laser beams of the RGB colors emitted from the laser beam sources 201R, 201G, and 201B are approximately collimated by the collimator lenses 202, 203, and 204, and are combined by the two dichroic mirrors 205 and 206. The light quantity of combined laser beam is adjusted by the light quantity adjuster 207, and then the adjusted laser beam is two-dimensionally scanned by a mirror of the optical scanner 208. The scanned light L' that is two-dimensionally scanned by the optical scanner 208 is reflected by the free-form surface mirror 209 so as to correct the distortion, and then is collected and condensed to the microlens array 210. Accordingly, an intermediate image is drawn.

Here, the microlens array 210 is used as the intermediate-image forming unit (light dispersing member) that separately disperses and emits the luminous flux of each pixel of the intermediate image (i.e., each point of the intermediate image). However, in some embodiments, any other light dispersing member may be used. Alternatively, a liquid crystal display (LCD) or a vacuum fluorescent display (VFD) may be used as a method of forming the intermediate image G'. However, in order to display the virtual image G with a wide dimension and high brightness, the laser scanning system is desired.

In the systems where an LCD or VFD is used, a non-image area of the display area on which the virtual image G is displayed is slightly irradiated with light, and it is difficult to completely shut such light to the non-image area. For this reason, in the systems where an LCD or VFD is used, the non-image area may disturb the visual recognizability of the sight ahead of the vehicle 301. By contrast, according to a laser scanning system, lighting off the laser beam sources 201R, 201G, and 201B can completely block the light from being irradiated onto a non-image area in the display region of the virtual image G. Such a configuration can prevent the light of the on-vehicle HUD 1 from reducing the visual recognizability of the sight ahead of the vehicle 301 in the non-image area, thus allowing the visual recognizability of the sight ahead of the vehicle 301 to be preferably maintained.

When the degree of warning is to be enhanced by gradually increasing the brightness of the warning image that alerts the driver, the display needs to be controlled such that only the brightness of the warning image gradually increases among the various kinds of images displayed in the display area 700 (FIG. 1). Again, the laser scanning system is suitable for such cases where the display is controlled such that the brightness of a part of the images displayed in the display area 700 is selectively increased. In a system using a liquid crystal display (LCD), a vacuum fluorescent display (VFD), or the like, it is difficult to change the brightness of only a specific portion in the display area 700, and the brightness of the images other than the warning image also increases among the various kinds of images displayed in the display area 700. In such cases, the difference in brightness cannot be increased between the warning image and the other images. Accordingly, it may be difficult to sufficiently enhance the degree of the warning by gradually increasing the brightness of the warning image.

The optical scanner 208 uses, for example, a micro-electromechanical systems (MEMS) 208a as an actuator driver system to incline the mirror to the main scanning direction and the sub-scanning direction perpendicular to the main scanning direction, and two-dimensionally scans (raster-scans) the laser beams incident on the mirror. The mirror is controlled in synchronization with the timing at which the laser beam sources 201R, 201G, and 201B emit light. For example, the optical scanner 208 may be configured by a mirror system including two mirrors that swing or rotate around two axes orthogonal to each other (the optical scanner 208 is not limited to the MEMS mirror).

FIG. 4 is a block diagram of an internal configuration of an optical system 250 of the on-vehicle HUD 1. The control system 250 of the on-vehicle HUD 1 includes a field programmable gate array (FPGA) 251, a central processing unit (CPU) 252, a read-only memory (ROM) 253, a random access memory (RAM) 254, an interface (I/F) 255, a bus line 256, an LD driver 257 as a light source controller, and a MEMS controller 258 as a scanning controller. The FPGA 251 uses the LD driver 257 to control the operation of the laser beam sources 201R, 201G, and 201B of the light source unit 220. Moreover, the FPGA 251 uses the MEMS controller 258 to control the operation of the MEMS 208a of the optical scanner 208. The LD driver 257 can generate laser drive currents (first, second, and third laser drive currents) for irradiating the laser light sources (first, second, and third laser light sources) 201R, 201G, and 201B, and drive the laser light sources (first, second, and third laser light sources) 201R, 201G, and 201B based on the generated laser drive currents (first, second, and third laser drive currents). The CPU 252 controls each function of the on-vehicle HUD 1. The ROM 253 stores various programs such as an image processing program executed by the CPU 252 to control each function of the on-vehicle HUD 1. The RAM 254 is mainly used as a working area in which the CPU 252 executes a program. The I/F 255 allows the on-vehicle HUD 1 to communicate with an external controller such as a controller area network (CAN) of the vehicle 301. For example, the I/F 255 is connected to a vehicle navigation device 400 and various sensor devices 500 (see FIG. 5) through the CAN of the vehicle 301. The I/F 255 is also connected to the front shooting camera 110 that shoots the display information of the on-vehicle HUD 1 and the background of the display information (the scenery through the front windshield 302). Further, the interface 255 is connected to the ambient light sensor 150 that detects the lightness or chromaticity of the ambient light around the display image.

FIG. 5 is a block diagram illustrating a schematic configuration of the on-vehicle HUD 1 and peripheral devices of the on-vehicle HUD 1. As an information acquisition unit that obtains for-driver information to be provided to a driver via a virtual image G, for example, the vehicle navigation device 400 and the sensor device 500 are provided. The on-vehicle HUD 1 according to the present embodiment includes the optical system 230 that serves as an image-light projection device, and the control system 250 that serves as a display controller.

The vehicle navigation device 400 may be any known vehicle navigation device provided for an automobile or the like. The vehicle navigation device 400 outputs information used for generating a route navigation image to be displayed on a virtual image G, and the information output from the vehicle navigation device 400 is input to the control system 250 as information (drawing data) for forming an image. The information that is output from the vehicle navigation device 400 includes, for example, as illustrated in FIG. 1, images indicating the number of the lanes (traffic lanes) of the road on which the vehicle 301 is traveling, the distance to the next point where the direction is to be changed (for example, a right turn, left turn, and a branch point), and the direction to which the path is to be changed next in order. As such information is input from the vehicle navigation device 400 to the control system 250, The on-vehicle HUD 1 displays navigation images as follows under the control of the control system 250. In particular, navigation images such as a lane indicator image 711, an inter-vehicle-distance presenting image 712, a path indicator image 721, a remaining distance indicator image 722, an intersection or the like name indicator image 723, are displayed on an upper display area A of the display area 700.

In the example display illustrated in FIG. 1, images indicating road-specific information (e.g., road name, and speed limit) is displayed on a lower display area B of the display area 700. The road-specific information is also input from the vehicle navigation device 400 to the control system 250 as the information (drawing data) for forming an image. The control system 250 uses the on-vehicle HUD 1 to display the road-specific information such as a road-name display image 701, a speed limit display image 702, and a no-passing zone display image 703 on the lower display area B of the display area 700.

The sensor device 500 includes one or two or more sensors that detect various kinds of information such as the behavior of the vehicle 301, the state of the vehicle 301, and the environment around the vehicle 301. The sensor device 500 outputs sensing information used for generating an image to be displayed as a virtual image G, and the information output from the sensor device 500 is input to the control system 250 as the information (drawing data) for forming an image. For example, in the example image illustrated in FIG. 1, a vehicle speed display image 704 indicating the vehicle speed of the vehicle 301 (i.e., the textual image of "83 km/h" in FIG. 1) is displayed on the lower display area B of the display area 700. The vehicle-speed information included in the CAN information of the vehicle 301 is input from the sensor device 500 to the control system 250, and the control system 250 controls the on-vehicle HUD 1 to display the textual image indicating the vehicle speed on the lower display area B of the display area 700.

In addition to the sensor that detects the vehicle speed of the vehicle 301, the sensor device 500 includes, for example, a laser radar or imaging device that detects the distance from another vehicle, a pedestrian, or construction such as a guard rail and a utility pole, which exist around (ahead of, on the side of, in the rear of) the vehicle 301, a sensor that detects the external environmental information (e.g., outside air temperature, brightness, and weather) of the vehicle 301, a sensor that detects the driving action (e.g., braking action, and the degree of acceleration) of the driver 300, a sensor that senses the amount of the fuel remaining in the fuel tank of the vehicle 301, and a sensor that senses the state of various kinds of vehicle-borne equipment such as an engine and a battery. As such information is detected by the sensor device 500 and sent to the control system 250 as the information (drawing data) for forming an image, the on-vehicle HUD 1 displays the information as a virtual image G. Accordingly, the information can be provided to the driver 300.

Next, a virtual image G that is displayed by the on-vehicle HUD 1 according to the present embodiment is described. For-driver information that the on-vehicle HUD 1 provides for the driver 300 via a virtual image G may be any information. Below, the for-driver information is broadly divided into passive information and active information.

The passive information is the information to be passively recognized by the driver 300 at the timing when a prescribed information provision condition is met. Accordingly, the passive information includes the information to be provided to the driver 300 at the timing when the on-vehicle HUD 1 is configured, and the passive information includes the information whose provision timing has a certain relation with the detail of the information. The passive information includes, for example, security information for driving, and route navigation information. Examples of the information related to safety during driving include inter-vehicle distance information (inter-vehicle-distance presenting image 712) between the vehicle 301 and the preceding vehicle, and urgent information related to driving (warning information such as emergency operation instruction information instructing the driver to perform an emergency operation, attention calling information, or the like). The route navigation information indicates a route to a prescribed destination, and such a route is provided to a driver by any known vehicle navigation device. The route navigation information includes, for example, lane information (i.e., the lane indicator image 711) indicating a lane to be taken at an upcoming intersection, and direction-change instruction information indicating a direction change to be made at the next intersection or branch point where the direction is to be changed from the straight-ahead direction. The direction-change instruction information includes, for example, path indicating information (i.e., the path indicator image 721) that indicates the path to be taken at the next intersection or branch point, remaining distance information (i.e., the remaining distance indicator image 722) indicating the distance to the intersection or branch point where the direction change is to be made, and name information of the intersection or branch point (i.e., the intersection or the like name indicator image 723).

The active information is the information to be actively recognized by the driver 300 at the timing specified by the driver himself or herself. The active information is information that is sufficient as long as the information is provided to the driver 300 at a timing desired by the driver 300. For example, information having a low or no relationship between the timing at which the information is provided and the content of the information is included in the active information. As the active information is obtained by the driver 300 at the timing when the driver 300 wishes, the active information is usually displayed for a long time or displayed continuously. For example, the road-specific information of the road on which the vehicle 301 is traveling, the vehicle-speed information (i.e., the vehicle speed display image 704) of the vehicle 301, the current-time information are included in the active information. The road-specific information includes, for example, the road-name information (i.e., the road-name display image 701), the regulation information of the road such as speed limit (i.e., the speed limit display image 702 and the no-passing zone display image 703), and other kinds of information of the road useful for the driver 300.

The for-driver information, which is broadly divided into the active information and the passive information as described above, is displayed in a corresponding area of the display area 700 where a virtual image is displayable. Specifically, the display area 700 is divided into two display areas in the vertical direction, and a passive-information image corresponding to the passive information is mainly displayed in the upper display area A of the two display areas and an active-information image corresponding to active information is mainly displayed in the lower display area B of the two display areas. Note that, when a part of the active-information image is displayed in the upper display area A, the active-information image is displayed in such a manner that a higher priority is given to the viewability of the passive-information image displayed in the upper display area A.

A stereoscopic image expressed using stereoscopic vision is used as the virtual image G that is displayed in the display area 700. More specifically, perspective images are used as the lane indicator image 711 and the inter-vehicle-distance presenting image 712 that are displayed in the upper display area A of the display area 700.

More specifically, a perspective image that is drawn by the perspective drawing method such that the length of the five horizontal lines of the inter-vehicle-distance presenting image 712 becomes shorter towards the upper side and the inter-vehicle-distance presenting image 712 heads for a single vanishing point. In particular, since the inter-vehicle-distance presenting image 712 is displayed such that the vanishing point approximately matches the observation point of the driver 300, the driver 300 during driving can easily perceive the sense of depth of the inter-vehicle-distance presenting image 712. Moreover, a perspective image is used in which the thickness of the horizontal lines becomes thinner towards the upper side, and the brightness of the horizontal lines becomes lower towards the upper side. Such a configuration allows the driver 300 during driving to even more easily perceive the depth of the inter-vehicle-distance presenting image 712.

The on-vehicle HUD 1 as a display device is expected to be developed into an augmented reality head-up display (AR-HUD) in which a display is superimposed on a road surface by augmented reality (AR) in the future. The AR superimposition allows the driver to receive a more natural display and information without a burden, and therefore further contribute to safe driving is expected. Among various types of HUDs, an LD-HUD using a laser element as a light source is expected to be a HUD type suitable for AR superimposition because a postcard is not generated by backlight unlike a liquid crystal HUD Considering the AR superimposition, it is assumed that, for example, when information of an oncoming vehicle is presented, the oncoming lane need to be included in the display range and widening the angle becomes an important technical problem of the HUD

In order to widen the angle of the LD-HUD, for example, a method of increasing the scanning angle of laser scanning is considered. However, when the scanning angle of the laser scanning is increased even with the same brightness of the laser, there is a concern that a phenomenon might occur in which the brightness at ends of the angle of view becomes higher than the brightness at the center of the angle of view due to a decrease in the scanning speed at the scanning ends or a phenomenon might occur in which the light quantity distributions at end portions become uneven due to uneven density of scanning lines at the scanning ends.

For example, in JP-2014-095787-A, there is room for improvement in that, even if uniform light is scanned, the light quantity distribution becomes non-uniform at end portions of the surface to be scanned in the sub-scanning direction (for example, the horizontal scanning direction in two-dimensional scanning) or in the vicinities of the end portions. More specifically, even when uniform light is scanned, the quantity of light on the surface to be scanned periodically increases or decreases due to uneven density of scanning lines at or in the vicinities of the end portions in the sub-scanning direction. Then, even when uniform light is scanned, on the surface to be scanned, the light becomes relatively dense and bright at folded portions where the optical scanning is alternately folded at one end and the other end in the sub-scanning direction, whereas the light becomes relatively sparse and dark in a non-folded portion. As a result, there is a concern that the visibility of the observer might be deteriorated.

In addition, in a case where an intermediate image is formed on an intermediate image screen such as a microlens array as in the LD-HUD of the present embodiment, non-uniformity of the light quantity at the ends of the angle of view and moire become remarkable. In particular, the trajectories of scanning lines may be deformed on the intermediate image screen when the intermediate image screen is inclined with respect to the optical axis of the light deflector or depending on the shape of the intermediate image screen. Accordingly, the deterioration of the image quality due to the non-uniformity of the light quantity distribution at the scanning ends may be promoted.

For example, the technique described in the above-described JP-2014-095787-A directly scans (draws) an image on a screen and is intended for laser scanning in which a scanning spot itself forms an image pixel. Therefore, there is no technical problem caused by the presence, arrangement, shape, and the like of an intermediate image screen. That is, regarding the technical problem caused by the presence, arrangement, shape, and the like of the intermediate image screen described above, the technique of JP-2014-095787-A is not a comparison target of the technique of the present embodiment.

For example, when the intermediate image screen is an optical element array (microlens array) as in the present embodiment, the light quantity is determined in consideration of the fact that the scanning light quantity distribution is quantized by the optical element array. Therefore, it is not sufficient to determine the light quantity distribution only by the configuration of normal laser scanning in which the scanning spot itself is an image pixel as in JP-2014-095787-A. In addition, in JP-2014-095787-A, the periodic noise of an end portion image due to sparse scanning lines in the sub-scanning in the widening angle of the laser scanning is not considered, and the influence on the visibility based on the noise at end portions is not considered.

In the present embodiment, there is provided a configuration for improving the uniformity (degree of uniformity) of the light quantity distribution at or in the vicinities of ends in the sub-scanning direction (for example, the horizontal scanning direction in two-dimensional scanning) on the surface to be scanned when scanning is performed with uniform light, thereby improving the image quality. There is also provided a configuration for controlling the power of the light from the light source in consideration of the influence of the intermediate image screen (the influence of quantization of the scanning light quantity distribution by the intermediate image screen) to improve the non-uniformity of the light quantity at the ends of the angle of view and restrain the occurrence of the moire. More specifically, the quantity of light from the light source is modulated according to the scanning position of an intermediate image on the intermediate image screen, thereby improving the non-uniformity of the quantity of light at the scanning ends (the ends of the angle of view) and restraining the occurrence of moire.

FIGS. 6 and 7 are first and second diagrams illustrating a technical problem caused by a conventional HUD device (a HUD device that does not perform the light quantity control of the present embodiment). Broken lines in FIG. 6 indicate an example of a ray path from the light deflector. In FIG. 7, a solid line indicates a trajectory of a scanning line, a broken line indicates an image drawing region, and a dashed-dotted line indicates an amplitude center of scanning.

As illustrated in FIG. 6, an image scanned by the light deflector is drawn on an intermediate image screen, which is a surface to be scanned, and the scanned image is projected from a projection optical system onto a projection plane. Here, the intermediate image screen is arranged to be inclined with respect to the optical axis of the light deflector. In addition, depending on the shape of the intermediate image screen, as illustrated in FIG. 7, the trajectory of the scanning line is deformed on the intermediate image screen. Thus, besides the scanning angle of the intermediate image screen, the shape of the intermediate image screen may also become a factor causing uneven brightness. In FIG. 7, the amplitude of the scanning line trajectory (solid line) in the image drawing region (broken line) of the intermediate image screen increases from the bottom to the top.

FIGS. 8, 9, 10, 11, 12, 13, and 14, respectively, are third, fourth, fifth, sixth, seventh, eighth, and ninth diagrams illustrating a technical problem caused by a conventional HUD device (a HUD device that does not perform the light quantity control of the present embodiment).

In order to enlarge a display angle of view in a display device that forms an intermediate image by an intermediate image screen, it may be effective to enlarge the intermediate image by increasing the scanning angle of the light deflector to set a larger image drawing region on the intermediate image screen.

However, for example, as illustrated in FIG. 8, assume that the light from the light source is two-dimensionally scanned by high-speed scanning in a main direction (main scanning) and sub-scanning at a lower speed than the main scanning. In such a case, as illustrated in FIG. 9, when the light source emits light with the same quantity of light and the same lighting period at the center and end portions of the image drawing region in the main scanning direction, there occur spatially sparse and dense areas in the lighting periods. In FIG. 9, when the center of the intermediate image screen (dashed-dotted line) and an end portion of the intermediate image screen (long-dashed double-dotted line) are compared with each other, the former has a sparse scanning line period and the latter has a dense scanning line period. Therefore, as illustrated in FIG. 10, in the light quantity distribution in the main scanning section, the light quantity at the scanning end portion is larger than the light quantity at the scanning center portion.

On the other hand, in the sub-scanning section, as illustrated in FIG. 11, the interval between the scanning lines is substantially uniform and sufficiently dense at the scanning center portion, and thus the light quantity is uniform in the sub-scanning direction. By contrast, as illustrated in FIG. 12, the scanning lines are sparse and dense at the scanning ends, and thus the light quantity in the sub-scanning direction periodically increases and decreases and becomes nonuniform.

As described above, when scanning is performed with uniform light, an increase in the quantity of light at the scanning end portions of the intermediate image screen in the main scanning direction and non-uniformity in the quantity of light at the scanning end portions in the sub-scanning direction cause moire-like noise on the intermediate image screen and on the display image as illustrated in FIG. 13, leading to deterioration in the quality of the display image.

Note that the main scanning speed and the sub-scanning speed of the light deflector illustrated in FIG. 8 are examples and, for example, may have different speed distributions as illustrated in FIG. 14. The same applies to the light quantity distribution. Here, for simplicity, the main direction is the horizontal direction of the intermediate image screen and the sub direction is the vertical direction of the intermediate image screen. However, the scanning directions for the intermediate image are merely an example. For example, the scanning direction may be rotated by 90°, and the directions of the main scanning and the sub-scanning with respect to the intermediate image are not limited to any particular directions.

FIG. 15 is a block diagram illustrating an example of a configuration of a display device 10 according to the present embodiment.

The display device 10 includes a light source 20, a light deflector 30, an intermediate image screen 40 as an intermediate-image forming unit, a scanning controller 50, and a light source controller 60. In FIG. 15, a solid line indicates a control signal, and broken lines indicate image light.

The light source 20 includes, for example, a laser light source that emits laser light. The light source 20 corresponds to, for example, the laser light sources (first, second, and third laser light sources) 201R, 201G, and 201B in FIG. 3.

The light deflector 30 includes, for example, a MEMS mirror. The light deflector 30 corresponds to, for example, the optical scanner 208 in FIG. 3.

The intermediate image screen 40 forms an intermediate image by two-dimensional scanning of the light deflector 30, for example. The intermediate image screen 40 corresponds to, for example, the microlens array (optical element array) 210 in FIG. 3. In other words, the intermediate image screen 40 is a surface to be scanned which is two-dimensionally scanned by the light deflector 30.

The display device 10 uses the light deflector 30 to two-dimensionally scan light from the light source 20 in the main scanning direction and the sub-scanning direction to from an image. More specifically, the display device 10 two-dimensionally scans the intermediate image screen 40, which is the surface to be scanned, with the light deflector 30 to form an intermediate image on the intermediate image screen 40. That is, the intermediate image screen 40 (scanned surface) is an image drawing region (drawing region). When the intermediate image screen 40 is a microlens array, the intermediate image formed passes through the microlens array and is enlarged and projected onto the combiner (front windshield 302). In addition, the image drawing region (drawing region) is an intermediate-image forming unit having an optical element array in which a plurality of optical elements is two-dimensionally arranged, and a plurality of small regions (for example, first and second small regions described below) are (are constituted by) a plurality of optical elements.

The scanning controller 50 causes the light deflector 30 to perform a plurality of scans in the main scanning direction while changing the position in the sub-scanning direction. The scanning controller 50 outputs a scanning control signal for executing two-dimensional scanning to the light deflector 30. The scanning controller 50 corresponds to, for example, the MEMS controller 258 in FIG. 4.

The light source controller 60 controls the intensity distribution (power balance) of the light from the light source 20 in the drawing region in the two-dimensional scanning by the light deflector 30, that is, the drawing region in the intermediate image formed on the intermediate image screen 40. For example, the light source controller 60 changes at least one of the intensity and the irradiation time of the light from the light source 20 to change the power of the light from the light source 20 (changes the light quantity in a lighting period based on a predetermined clock period). The light source controller 60 outputs a light quantity control signal for executing light quantity adjustment to the light source 20. The light source controller 60 corresponds to, for example, the LD driver 257 in FIG. 4. In the present specification, the control of changing the power of light from the light source 20 performed by the light source controller 60 may be described using the expression "light source control".

More specifically, the light source controller 60 divides a drawing region into a plurality of small regions having the same shape and the same area based on the resolution of the image to be drawn in the drawing region (drawing region in the intermediate image) in two-dimensional scanning, defines a small region located on the center side of the drawing region in the main scanning direction as a first small region and a small region located on each end side of the drawing region in the main scanning direction as a second small region, and sets the intensity distribution of light irradiated from the light source 20 to the first small region and the intensity distribution of light irradiated from the light source 20 to the second small region to be different from each other when the brightness of the first small region and the bright ness of the second small region are the same in the information (drawing data) input to the control system 250 to form the image to be drawn. As described above, the increase of the light quantity at the scanning end portion in the main scanning direction of the surface to be scanned (drawing region) and the non-uniformity of the light quantity at the scanning end portion in the sub-scanning direction may lead to the quality deterioration of the display image. In a case where the brightness of information (drawing data) for forming an image to be drawn is the same in the entire drawing region, if the light quantity on the surface to be scanned (drawing region) becomes non-uniform even when the drawing region is scanned with a uniform light quantity, for example, moire-like noise is may be generated in the intermediate image screen 40 and the display image (FIG. 13). In order to prevent such a failure, the intensity distribution of the light from the light source 20 is set to be different (increased or decreased) from each other in accordance with the drawing region during two-dimensional scanning so as to improve the uniformity (degree of uniformity) by eliminating the non-uniformity of the light quantity on the surface to be scanned (drawing region).

FIG. 16 is a diagram illustrating an example of the light quantity distribution when the light source controller 60 performs the light source control (the control of changing the power of the light from the light source 20) when the brightness of the information (drawing data) for forming the image to be drawn is the same in the entire drawing region, in other words, when the entire drawing region has uniform brightness. In FIG. 16, a solid line indicates a light quantity distribution in a main scanning section when the light source control is performed by the light source controller 60. Broken lines indicate light quantity distributions by respective lightings. A dashed-dotted line indicates a light quantity distribution (corresponding to FIG. 10) in the main scanning section when the light source control is not performed by the light source controller 60. As illustrated in FIG. 16, performing the light source control by the light source controller 60 can reduce an increase in brightness at the scanning end portions in the main scanning direction and the sub-scanning direction.

FIGS. 17A to 17C illustrate an example of the first small region and the second small regions in the two-dimensional scanning. The first small region and the second small regions in FIGS. 17A to 17C are obtained by dividing the image drawing region (drawing region), which is the intermediate image screen 40 (scanned surface), based on the resolution of the formed image, and have the same shape and the same area. The first small region is located on the center side of the drawing region in the main scanning direction, and the second small regions are located on end sides of the drawing region in the main scanning direction. It is also assumed that the brightness of the first small region and the second small regions in the drawing data is the same.

FIG. 18 is a diagram illustrating an example of the configuration of the intermediate image screen 40. As illustrated in FIG. 18, the intermediate image screen 40 includes a microlens array (optical element array) 42 including a plurality of microlenses (optical elements) 41. The microlenses 41 have the same shape and the same area.

FIG. 19 is a diagram illustrating an example of an intermediate image viewed from the emission side of the microlens array 42. When the microlens array 42 is used as the intermediate image screen 40, the light quantity distribution on the incident side of the microlens array 42 two-dimensionally scanned by the light deflector 30 is quantized by the microlens array 42.

FIG. 20 is a diagram (schematic diagram) illustrating an example of the relationship between the light quantity and the scanning line trajectory in each microlens 41 of the microlens array 42 when the microlens array 42 is scanned with uniform scanning light in order to make the entire drawing region uniform in brightness. In FIG. 20, the left side corresponds to the center side of the image drawing region, and the right side corresponds to an end side of the image drawing region. That is, the light quantity is relatively small on the left side (the center side of the image drawing region), and the light quantity is relatively large on the right side (the end side of the image drawing region). In the microlens array 42, the light quantity distribution is determined by the overlapping with each of the microlenses 41 of the microlens array 42 in addition to the scanning speed and the scanning position of the light deflector 30.

FIGS. 21A and 21B are diagrams illustrating an example of a case where the intensity distribution of light irradiated from the light source 20 to each of the microlenses 41 of the microlens array 42 is set to be different from each other in order to make the entire drawing region uniform in brightness. In FIG. 21A, broken lines indicate scanning line trajectories, and regions surrounded by circular broken lines indicate spots of light from the light source 20 via the light deflector 30. As illustrated in FIG. 21A, a microlens A has two spots from the light source 20 via the light deflector 30, whereas a microlens B has three spots from the light source 20 via the light deflector 30. In FIG. 21B, dashed-dotted lines indicate light quantity distributions by respective lightings on the microlens A, and long-dashed double-dotted lines indicate light quantity distributions by respective lightings on the microlens B. As illustrated in FIG. 21A and FIG. 21B, the light source controller 60 causes the intensity distribution of the light irradiated from the light source 20 to each of the microlenses 41 of the microlens array 42 to be different from each other between the microlenses 41. That is, the light quantity distribution on the pixel of each microlens 41 is changed in consideration of the quantization by the microlens array 42.

FIG. 22 is a diagram (schematic diagram) illustrating an example of a case in which the total power of light from the light source in each microlens of the microlens array is equalized. In FIG. 22, similarly to FIG. 20, the left side corresponds to the center side of the image drawing region, and the right side corresponds to an end side of the image drawing region. As illustrated in FIG. 22, in order to make the entire drawing region uniform in brightness, the light source controller 60 equalizes, among the microlenses 41, the total amount of the power of the light irradiated from the light source 20 to each microlens 41 of the microlens array 42. That is, regarding the power of light irradiated from the light source 20 to the microlens array 42 (as the optical element array), the light source controller 60 controls the light source 20 so that the total power of the light irradiated from the light source 20 to each of the microlenses 41 (as the plurality of optical elements) in the microlens array 42 (as the optical element array) by the two-dimensional scanning is equal among the microlenses 41 (as the plurality of optical elements). As described above, the pixel intensities of the individual microlenses 41 are equalized in consideration of the quantization by the microlens array 42. Such a configuration can improve the visibilities of the intermediate image and the display image.

FIG. 23 is a diagram (schematic diagram) illustrating an example of randomly changing the total power of light from the light source in each microlens of the microlens array. In FIG. 23, similarly to FIG. 20, the left side corresponds to the center side of the image drawing region, and the right side corresponds to an end side of the image drawing region. As illustrated in FIG. 23, in order to make the entire drawing region uniform in brightness, the light source controller 60 randomly changes, among the microlenses 41, the total amount of the power of the light irradiated from the light source 20 to each of the microlenses 41 of the microlens array 42. That is, regarding the power of light irradiated from the light source 20 to the microlens array 42 (as the optical element array), the light source controller 60 controls the light source 20 so that the total power of the light irradiated from the light source 20 to each of the microlenses 41 (as the plurality of optical elements) in the microlens array 42 (as the optical element array) by the two-dimensional scanning is randomly changed among the microlenses 41 (as the plurality of optical elements). For example, if an attempt is made to change the profile of the light from the light source 20 in order to make the light quantities of the respective microlenses 41 uniform in accordance with the size of the microlens array 42 (microlenses 41) and the scanning line trajectory of the light deflector 30, there is a risk of increasing the size and complexity of the apparatus. Therefore, as illustrated in FIG. 23, the light source controller 60 is controlled so that the light quantity distribution in each microlens 41 of the microlens array 42 becomes random. Such control can reduce the periodicity of moire-like noise at the scanning end portions and improve the qualities of the intermediate image and the display image without changing the profile of the light from the light source 20.

The control of the light source controller 60 illustrated in FIGS. 22 and 23 is an example. Regarding the power of light irradiated from the light source 20 to the microlens array 42 (as the optical element array) in the two-dimensional scanning, the light source controller 60 controls the light source 20 so that the total power of the light irradiated from the light source 20 to each of the microlenses 41 (as the plurality of optical elements) in the microlens array 42 (as the optical element array) periodically varies among the microlenses 41 (as the plurality of optical elements) based on the direction of arrangement of the microlens array 42 (as the optical element array), in order to make the entire drawing region uniform in brightness. Such control can reduce the periodicity of the moire-like noise at the scanning end portion, thus enhancing the qualities of the intermediate image and the display image.

The display device 10 of the present embodiment uses the light deflector 30 to scan the light irradiated from the light source 20 to a drawing region to form an image based on drawing data in the drawing region. The display device 10 includes the light source controller 60 that controls the intensity of light irradiated from the light source 20 and the scanning controller 50 that controls the light deflector 30. The scanning using the light deflector 30 is two-dimensional scanning in which the drawing region is scanned in the main scanning direction and the sub-scanning direction orthogonal to the main scanning direction. The scanning controller 50 folds back the two-dimensional scanning by the light deflector 30 at end portions in the drawing region in the main scanning direction to perform a plurality of scans in the main scanning direction while changing the position in the sub-scanning direction, thus performing the two-dimensional scanning by the light deflector 30.

In the above description, for ease of understanding, the case where the brightness of the information (drawing data) for forming an image to be drawn is the same in the entire drawing region, in other words, the case where the entire drawing region (microlens array 42) has uniform brightness has been described as a specific example. Actually, the drawing region (microlens array 42) is divided into a plurality of small regions (microlenses 41) having the same shape and the same area based on the resolution of the image to be drawn, and the brightness of each small region (each microlens 41) may be different in the information (drawing data) for forming the image to be drawn that is input to the control system 250. Even in such a case, the visibility of the intermediate image and the display image can be improved by controlling the total sum of the power of the light irradiate to each small region, based on the control of the total sum of the power of the light irradiated to each small region in the case where the brightness is the same in the entire drawing region.

In particular, when a small region located on the center side of the drawing region in the main scanning direction is defined as a first small region and a small region located on each end side of the drawing region in the main scanning direction is defined as a second small region, and the brightness of the first small region and the brightness of the second small region in the information (drawing data) for forming an image to be drawn that is input to the control system 250 are the same, the intensity distribution of the light irradiated from the light source 20 to the first small region and the intensity distribution of the light irradiated from the light source 20 to the second small region are controlled to be different from each other, based on the control of the total sum of the power of the light irradiated to each small region in the case where the brightness is the same in the entire drawing region. Thus, the visibilities of the intermediate image and the display image can be improved. The control related to the two-dimensional scanning described above is executed by the light source controller 60.

Here, the intermediate image screen 40 (microlens array 42) forms an intermediate image based on at least one frame (time segment). The frame (time segment) is a predetermined time segment in which a scanning time from a scanning start position to a scanning end position in two-dimensional scanning of the drawing region is set as a minimum unit.

In such a case, the light source controller 60 controls the light source 20 so that the intensity distribution of the light irradiated from the light source 20 to the first small region and the intensity distribution of the light irradiated from the light source 20 to the second small region by two-dimensional scanning are different from each other in one frame (time segment) when the image to be drawn (formed image) input to the control system 250 is divided by (based on) the above-described frames (time segments). Changing the intensity of the laser scanning for forming the intermediate image in one frame (time segment) can restrain the non-uniformity of the light quantity at the scanning end portions, reduce the periodicity of moire-like noise, and improve the qualities of the intermediate image and the display image.

Alternatively, the light source controller 60 controls the light source 20 so that the intensity distribution of the light irradiated from the light source 20 to the first small region and the intensity distribution of the light irradiated from the light source 20 to the second small region by two-dimensional scanning are different from each other over a plurality of frames (time segments) when the image to be drawn (formed image) input to the control system 250 is divided by (based on) the above-described frames (time segments). Changing the intensity of the laser scanning for forming the intermediate image in the plurality of frames (time segments) can restrain the non-uniformity of the light quantity at the scanning end portions, reduce the periodicity of moire-like noise, and improve the qualities of the intermediate image and the display image. In addition, the control load can be reduced.

In the case where one frame of scanning by the light deflector 30 is sufficiently fast, actually, the observer adds a plurality of frames of scanning to visually recognize the plurality of frames. Changing the quantity of light on the intermediate image screen 40 over a plurality of frames can uniformize the quantities of light of the intermediate image and the display image after the addition of the plurality of frames, which are visually recognized by the observer, and thus improve the visibility of the observer.

FIG. 24, FIG. 25, and FIG. 26 are diagrams illustrating first, second, and third examples in which the intensity distributions of light from the light source 20 in drawing regions (for example, first small region and second small regions) of an intermediate image formed over a plurality of frames (time segments) by the intermediate image screen 40 (microlens array 42) are different from each other.

For example, as illustrated in FIG. 24, a case where three frames (first, second, and third frame periods) of image formation correspond to the integration period (time resolution) of the human eye is considered. In such a case, as illustrated in FIG. 25, each frame period has a first half (most part) of the drawing period and a second half (small part) of the non-lighting period when the relationship between time and amplitude in the sub-scanning direction is seen.

As illustrated in FIG. 26, the light quantity distributions (light intensity distributions) in the first, second, and third frame periods in FIG. 24 are changed. In FIG. 26, a solid line indicates a cumulative light quantity distribution (light intensity distribution) in the first, second, and third frame periods. A broken line indicates a light quantity distribution (light intensity distribution) in the first and third frame periods. A dashed-dotted line indicates a light quantity distribution (light intensity distribution) in the second frame period. As illustrated in FIG. 26, changing the light quantity distribution (light intensity distribution) in at least a part of the first, second, and third frame periods can improve the uniformity of the light quantity distribution (light intensity distribution) after integration. In such a case, as illustrated in FIG. 25, since the non-lighting period of the light source 20 is interposed between frames, there is a margin in time. Therefore, the light source control by the light source controller 60 may be performed by simple ON / OFF control instead of fine light-quantity adjustment in the frame, thus allowing the control load of the light source controller 60 to be reduced. The light quantity adjustment in FIG. 26 is merely an example, and the light intensity between frames can be set to any intensity. For example, all the light quantity distributions (light intensity distributions) in the first, second, and third frame periods may be different from each other.

In addition to the light quantity control by the light source controller 60 described with reference to FIGS. 24 to 26, the scanning controller 50 controls the light deflector 30 so that the path of the two-dimensional scanning of the drawing region in the first frame (time segment) and the path of the two-dimensional scanning in the second frame (time segment) are different from each other in a plurality of frames (time segments). That is, simultaneously changing the light quantity of the light source 20 and the scanning path over a plurality of frames (time segments) can restrain the non-uniformity of the light quantity distribution at the scanning end portion.

As described above, the non-uniformity of the light on the intermediate image screen 40 is affected by the change in the interval between the forward path and the backward path in the trajectory of the main scanning reciprocating in the image drawing region during the sub-scanning period. In particular, with respect to the periodic unevenness of the light quantity in the sub-scanning direction, the uniformity of the light quantity distribution can be further enhanced by changing the scanning line trajectory in accordance with the light source intensity between frames.

FIG. 27, FIG. 28, FIG. 29, and FIG. 30 are diagrams illustrating first, second, third, and fourth examples in the case in which light quantity control and scanning path control are performed over a plurality of frames (time segments).

FIG. 27 illustrates the intensity distribution in the sub-scanning direction at the scanning end when the light quantity is randomly changed for each scanning line. In FIG. 27, broken lines indicate intensity distributions for respective scanning lines in which the intensities are randomly changed, and a dashed-dotted line indicates an intensity distribution of the sum of the scanning lines in the sub-scanning section. As illustrated in FIG. 27, although the periodicity of the increase and decrease in the light quantity is reduced to some extent, the unevenness in the light quantity distribution remains.

FIG. 28 illustrates a case where the light quantity distribution is changed between the first frame period and the second frame period when the first frame period and the second frame period are added and visually recognized. In FIG. 28, a solid line indicates a light quantity distribution in a main scanning section, a dashed-dotted line indicates a light quantity distribution in the first frame period, and a long-dashed double-dotted line indicates a light quantity distribution in the second frame period. In FIG. 28, the light quantity distributions are more uniform than the light quantity distributions in FIG. 27.

FIG. 29 illustrates a case where the scanning line trajectory is set to be different between the first frame period and the second frame period when the first frame period and the second frame period are added and visually recognized. In FIG. 29, a solid line indicates a scanning line trajectory in the first frame period, and a broken line indicates a scanning line trajectory in the second frame period. Performing the control of the scanning line trajectory illustrated in FIG. 29 together with the control of the light quantity distribution illustrated in FIG. 28 allows the light quantity distributions to be more uniform (than the light quantity distributions in FIGS. 27 and 28).

Although FIG. 27 illustrates the case where the light quantity is randomly changed for each scanning line, the method of changing the light quantity for each scanning line is not limited to the case of FIG. 27 and various design changes can be made. For example, as illustrated in FIG. 30, the light quantity may be changed at any periods for each scanning line.

The light source controller 60 can change the power of the light from the light source 20 with reference to the scanning line in the two-dimensional scanning. For example, the light source controller 60 can control the quantity of light from the light source 20 for each scanning line formed by the forward path and the backward path of the main scanning. The light source controller 60 may randomly change the power of the light from the light source 20 with reference to the scanning line in the two-dimensional scanning or may change the power of the light from the light source 20 according to the period of the scanning line.

FIG. 31 is a diagram illustrating an example of light quantity control in unit of scanning line. In FIG. 31, a solid line indicates a scanning line trajectory, broken lines indicate main scanning ends of an image drawing region, and long-dashed double-dotted lines indicate main scanning ends of the light deflector 30. As illustrated in FIG. 31, the main scanning ends (long-dashed double-dotted line) of the light deflector 30 are outside the main scanning ends (broken lines) of the image drawing region. A common region, which is positioned at a central portion, of a region between the main scanning ends (long-dashed double-dotted lines) of the light deflector 30 and a region between the main scanning ends (broken lines) of the image drawing region is an image drawing region (lighting region). Regions, which are positioned at both ends, in which the main scanning ends (long-dashed double-dotted lines) of the light deflector 30 protrude outward from the main scanning ends (broken lines) of the image drawing region are non-image drawing regions (non-lighting regions).

As illustrated in FIG. 31, the light quantity control performed in unit of scanning line can interpose the non-lighting period in the main scanning between changes in the light quantity unless the peak in the main scanning is used for image drawing. In addition, even in the case of drawing up to the peak, the interval between changes in the light quantity can be set larger than changing the light quantity on the scanning line, thus reducing the burden on the light source controller 60. If the light quantity cannot be uniformly controlled, the period of the scanning line can be shortened to reduce the noise due to moire.

FIG. 32 is a diagram illustrating an example in which the light source controller 60 changes the irradiation time of light from the light source 20 to change the power of the light from the light source 20. In FIG. 32, light source control periods 1 to 4 are set to have the same time unit. The light irradiation time of the light source control period 3 is the longest, the light irradiation time of the light source control period 1 is the second longest, the light irradiation time of the light source control period 2 is the third longest, and the light irradiation time of the light source control period 4 is the shortest. The light intensities in the light source control periods 1 to 4 are the same.

FIG. 33 is a diagram illustrating an example in which the light source controller 60 changes the intensity of light from the light source 20 to change the power of the light from the light source 20. In FIG. 33, light source control periods 1 to 4 are set to have the same time unit. The light intensity of the light source control period 3 is the strongest, the light intensity of the light source control period 1 is the second strongest, the light intensity of the light source control period 2 is the third strongest, and the light intensity of the light source control period 4 is the weakest. The light irradiation time in the light source control periods 1 to 4 is the same.

Although FIGS. 32 and 33 illustrate the case where the waveform of the light from the light source 20 is a rectangular wave, for example, a Gaussian waveform or another pulse shape may be used as the waveform of the light from the light source 20. The power of the light from the light source 20 may be changed by changing both the irradiation time and the intensity of the light from the light source 20.

In FIG. 34, an estimation unit 70 is added to the block diagram of FIG. 15. The estimation unit 70 acquires information on the scanning of the light deflector 30 from the scanning controller 50. For example, the estimation unit 70 acquires, from the scanning controller 50, information on the scanning angles of the light deflector 30 in the main scanning direction and the sub-scanning direction, and estimates a scanning position corresponding to the information (scanning angles) when an intermediate image is formed on the intermediate image screen 40. The information on the estimation result by the estimation unit 70 is output to the light source controller 60. Based on the estimation result of the estimation unit 70, the light source controller 60 controls the power from the light source 20 at the scanning position when the intermediate image is formed on the intermediate image screen 40. As described above, the light source controller 60 controls the power of the light emitted from the light source 20 at the scanning position in the drawing region, based on the scanning angles of the light deflector 30 in the main scanning direction and the sub-scanning direction. If the scanning position in forming the intermediate image on the intermediate image screen 40 is estimated, the positional accuracy of the light quantity control by the light source controller 60 can be enhanced.

FIG. 35 is a diagram illustrating an example of an estimation method by the estimation unit 70. As illustrated in FIG. 35, assume that a straight line perpendicular to the reflection surface of the light deflector 30 from the center of the light deflector 30 passes through the center of the intermediate image screen 40 and is perpendicular to the surface of the intermediate image screen 40. In such a case, the drawing region in the intermediate image formed on the intermediate image screen 40 is estimated by the following conditional expressions (1) and (2) using the scanning angle of the light deflector 30.

$$X = L \times \tan(\theta x) \cdots (1)$$

$$Y = L \times \tan(\theta y) \cdots (2)$$

where X is the distance in the main scanning direction from the center of the intermediate image screen 40 to the drawing region (the reference numeral follows a coordinate axis representing a direction with respect to the main scanning direction), Y is the distance in the sub-scanning direction from the center of the intermediate image screen 40 to the drawing region (the reference numeral follows a coordinate axis representing a direction with respect to the sub-scanning direction), L is the distance from the center of the light deflector 30 to the center of the intermediate image screen 40, $\theta x$ is the scanning angle in the main scanning direction by the light deflector 30, and $\theta y$ is the scanning angle of the light deflector 30 in the sub-scanning direction.

The estimation method according to the conditional expressions (1) and (2) is merely an example, and any other suitable estimation method may be used. For example, a delay time due to the position estimation may be added or subtracted as the offset amount of X and Y in the conditional expressions (1) and (2). Alternatively, a look-up table (LUT) indicating a relationship between the scanning angle and the position of light on the intermediate image screen 40 may be stored in advance, and the drawing region in the intermediate image formed on the intermediate image screen 40 may be estimated by referring to and selecting the look-up table according to the scanning angle.

The light source controller 60 controls the power of the light from the light source 20 based on the light quantity distribution when the observer observes the intermediate image (image formed in the drawing region) by the intermediate image screen 40. That is, the light quantity distribution is controlled in consideration of enlargement and reduction by an observation system between the light deflector 30 and the intermediate image screen 40.

FIG. 36 is a block diagram illustrating an example of the configuration of the display device 10 in which a lookup table 81 is provided in a light projecting unit 80. In FIG. 36, a solid line indicates a control signal, broken lines indicate image light, and a long-dashed double-dotted line indicates information on the ratio of light quantity distributions (light-quantity-distribution-ratio information).

As illustrated in FIG. 36, an intermediate image by the intermediate image screen 40 is projected on the projection plane of the light projecting unit 80 in an enlarged or reduced manner. In FIG. 36, the size of the intermediate image is A, the size of the projection image of the light projecting unit 80 is B, a relation of B > A is satisfied (the intermediate image is enlarged and projected). In such a case, in addition to the change in size, the light quantity distribution may be changed by the influence of an optical element (a free-form surface mirror, a reflection surface of a projection mirror, or the like) used for enlarging or reducing the intermediate image.

Therefore, the look-up table (LUT) 81 that defines the relationship between the light quantity distribution of the intermediate image (size A) and the light quantity distribution of the projected image (size B) is stored in advance in the light projecting unit 80, and the power of the light from the light source 20 is controlled by referring to and selecting the look-up table 81 according to the scanning angle. In such control, the light-quantity-distribution-ratio information defining the relationship between the light quantity distribution of the intermediate image (size A) and the light quantity distribution of the projected image (size B) is output from the lookup table 81 of the light projecting unit 80 to the light source controller 60, and the light source controller 60 controls the power of light from the light source 20 based on the input light-quantity-distribution-ratio information.

Although FIG. 36 illustrates the case where the lookup table 81 is provided in the light projecting unit 80, the lookup table 81 may be provided in the light source controller 60. The light-quantity-distribution-ratio information stored in the lookup table 81 may be dynamically estimated in consideration of the characteristics of the optical elements and the surrounding environment (temperature or the like), and the method of acquiring the light-quantity-distribution-ratio information is not limited to any particular method.

The light source controller 60 may randomly change the power of the light from the light source 20 in the two-dimensional scanning with reference to the power of the light irradiated from the light source 20 to a predetermined main scanning position in the two-dimensional scanning.

The light source controller 60 may change the power of the light from the light source 20 in the two-dimensional scanning according to the period of the two-dimensional scanning, with reference to the power of the light irradiated from the light source 20 to a predetermined main scanning position in the two-dimensional scanning.

In the above-described embodiments, the case where the display device is applied to the on-vehicle HUD (head-up display) mounted on a vehicle, which is a mobile object, has been described as an example. However, the application target of the display device is not limited to the on-vehicle HUD For example, the present invention can also be applied to a head-up display, other than for the vehicle, to project an image formed by a display device onto an observation region observed by an observer and displays the image as a virtual image to the observer. The display device can also be applied to an image display device such as a display and a wearable device such as a head mounted display (HMD).

In the above embodiments, the display device has been described as an example in which a scanned image by the light deflector is drawn on the intermediate image screen and the scanned image is projected from the projection optical system onto the projection plane. On the other hand, in some embodiments, the display device may include no intermediate image screen and directly project an image scanned by a light deflector onto a projection plane of a screen.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a TCP/IP signal carrying computer code over an IP network, such as the Internet. The carrier medium may also include a storage medium for storing processor readable code such as a floppy disk, hard disk, CD ROM, magnetic tape device or solid state memory device.

**Claims**

**1.** A display device (10) comprising:

a light source (20) configured to emit light;
a light deflector (30) configured to scan the light emitted from the light source (20) to form an image based on drawing data in a drawing region;
a light source controller (60) configured to control an intensity of the light emitted from the light source (20); and
a scanning controller (50) configured to control the light deflector (30),
wherein the light deflector (30) is configured to perform two-dimensional scanning to scan the drawing region in a main scanning direction and a sub-scanning direction orthogonal to the main scanning direction,
wherein the scanning controller (50) is configured to:

fold back the two-dimensional scanning of the light deflector (30) at end portions of the drawing region in the main scanning direction to perform a plurality of scans in the main scanning direction while changing a position in the sub-scanning direction;
divide the drawing region into a plurality of small regions having a same shape and a same area, based on a resolution of the image to be formed in the drawing region; and
define a small region located on a center side of the drawing region in the main scanning direction as a first small region and a small region located on an end side of the drawing region in the main scanning direction as a second small region, and

wherein the light source controller (60) is configured to control the light source (20) such that an intensity distribution of light irradiated from the light source (20) to the first small region and an intensity distribution of light irradiated from the light source to the second small region in the two-dimensional scanning are different from each other when a brightness of the first small region and a brightness of the second small region are equal in the drawing data.

**2.** The display device according to claim 1, wherein the light source controller (60) is configured to control the light source (20) so that the intensity distribution of light irradiated from the light source (20) to the first small region and the intensity distribution of light irradiated from the light source to the second small region in the two-dimensional scanning are different from each other in one time segment when the image to be formed is divided by a predetermined time segment having a scanning time from a scanning start position to a scanning end position in the two-dimensional scanning of the drawing region as a minimum unit.

**3.** The display device according to claim 1, wherein the light source controller (60) is configured to control the light source (20) so that the intensity distribution of light irradiated from the light source to the first small region and the intensity distribution of light irradiated from the light source to the second small region in the two-dimensional scanning are different from each other over a plurality of time segments when the image to be formed is divided by a predetermined time segment having a scanning time from a scanning start position to a scanning end position in the two-dimensional scanning of the drawing region as a minimum unit.

**4.** The display device according to claim 3, wherein the scanning controller (50) is configured to control the light deflector (30) so that a path of the two-dimensional scanning of the drawing region in a first time segment and a path of the two-dimensional scanning in a second time segment in the plurality of time segments are different from each other.

**5.** The display device according to any one of claims 1 to 4, further comprising an intermediate-image forming unit (40) configured to form wherein the drawing region,
wherein the intermediate-image forming unit (40) includes an optical element array (210, 42) in which a plurality of optical elements (41) forming the plurality of small regions is two-dimensionally arranged.

**6.** The display device according to claim 5, wherein the light source controller (60) is configured to control the light source (20) so that a total power of light irradiated from the light source (20) to each of the plurality of optical elements (41) in the optical element array (42) by the two-dimensional scanning is equal among the plurality of optical elements (41).

**7.** The display device according to claim 5, wherein the light source controller (60) is configured to control the light source (20) so that a total power of light irradiated from the light source (20) to the plurality of optical elements (41) in the optical element array (42) by the two-dimensional scanning randomly changes among the plurality of optical elements (41).

**8.** The display device according to claim 5, wherein the light source controller (60) is configured to control the light source (20) so that a total power of light irradiated from the light source (20) to the plurality of optical elements (41) in the optical element array (42) by the two-dimensional scanning periodically changes among the plurality of optical elements (41) in accordance with an arrangement direction of the optical element array.

**9.** The display device according to any one of claims 1 to 8,
wherein the light source controller (60) is configured to control power of light irradiated from the light source (20) to a scanning position in the drawing region, based on a scanning angle in the main scanning direction and the sub-scanning direction.

**10.** The display device according to any one of claims 1 to 9,
wherein the light source controller (60) is configured to randomly change power of light from the light source (20) in the two-dimensional scanning with reference to power of light irradiated from the light source (20) to a predetermined main scanning position in the two-dimensional scanning.

**11.** The display device according to any one of claims 1 to 9,
wherein the light source controller (60) is configured to change the power of the light from the light source in the two-dimensional scanning in accordance with a cycle of the two-dimensional scanning with reference to the power of the light irradiated from the light source to a predetermined main scanning position in the two-dimensional scanning.

**12.** The display device according to any one of claims 1 to 11,
wherein the light source (20) is a laser light source configured to emit laser light.

**13.** A head-up display (1) comprising:
wherein the head-up display (1) is configured to project the image formed by the display device (10) according to any one of claims 1 to 12 onto an observation region observed by an observer and display the image to the observer as a virtual image.

**14.** A vehicle (301) comprising one of the display device (10) according to any one of claims 1 to 12 and the head-up display (1) according to claim 13.

**15.** A display method for scanning light emitted from a light source using a light deflector to form an image based on drawing data in a drawing region, the method comprising:

scanning the drawing region in a main scanning direction and a sub-scanning direction orthogonal to the main scanning direction with the light deflector (30) to perform two-dimensional scanning;

folding back the two-dimensional scanning of the light deflector (30) at end portions of the drawing region in the main scanning direction to perform a plurality of scans in the main scanning direction while changing a position in the sub-scanning direction;
dividing the drawing region into a plurality of small regions having a same shape and a same area, based on a resolution of the image to be formed in the drawing region;
defining a small region located on a center side of the drawing region as a first small region and a small region located on an end side of the drawing region as a second small region; and
controlling the light source (20) such that an intensity distribution of light irradiated from the light source (20) to the first small region and an intensity distribution of light irradiated from the light source to the second small region are different from each other in the two-dimensional scanning when a brightness of the first small region and a brightness of the second small region are equal in the drawing data.

FIG. 1

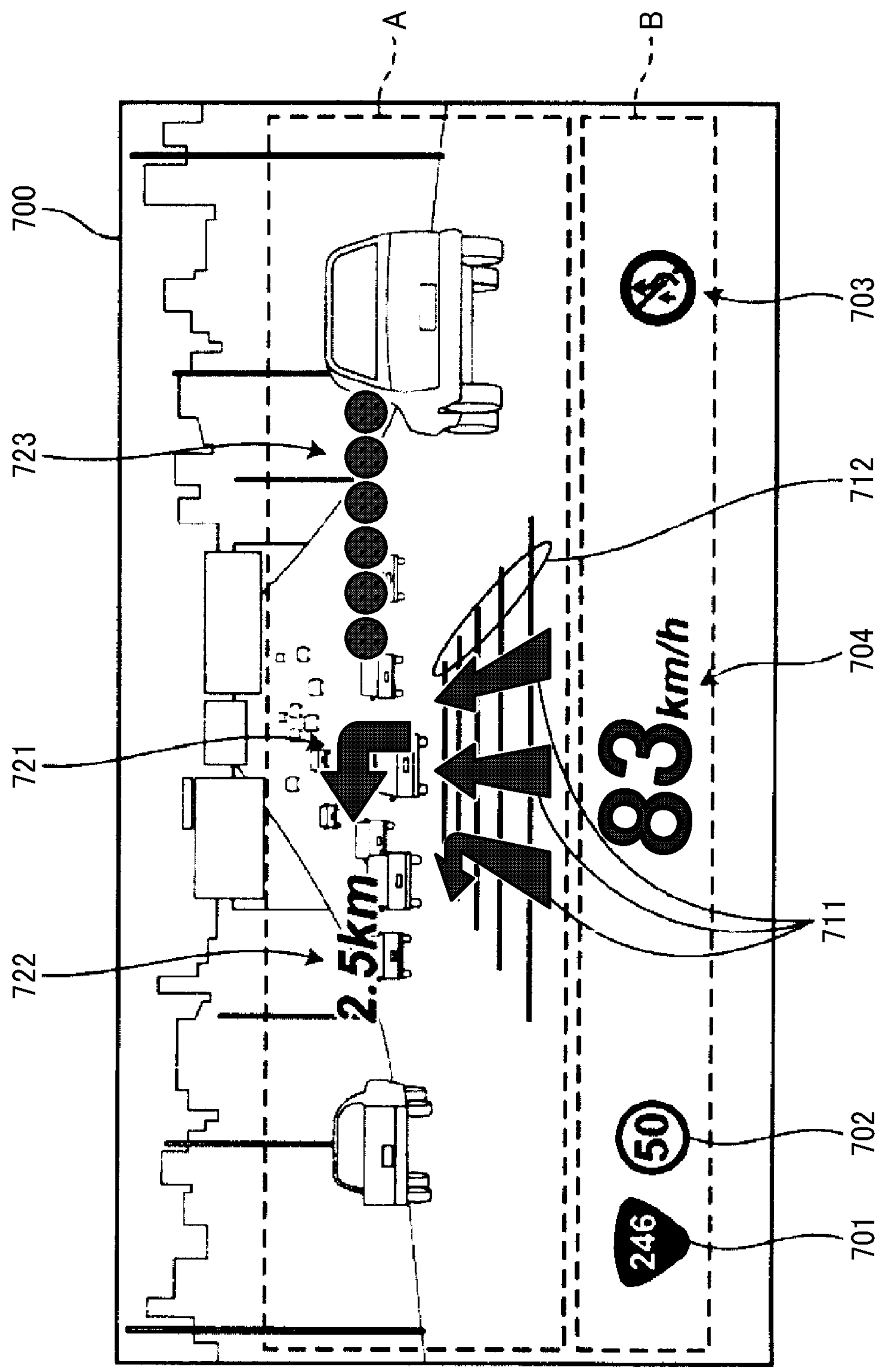

FIG. 2

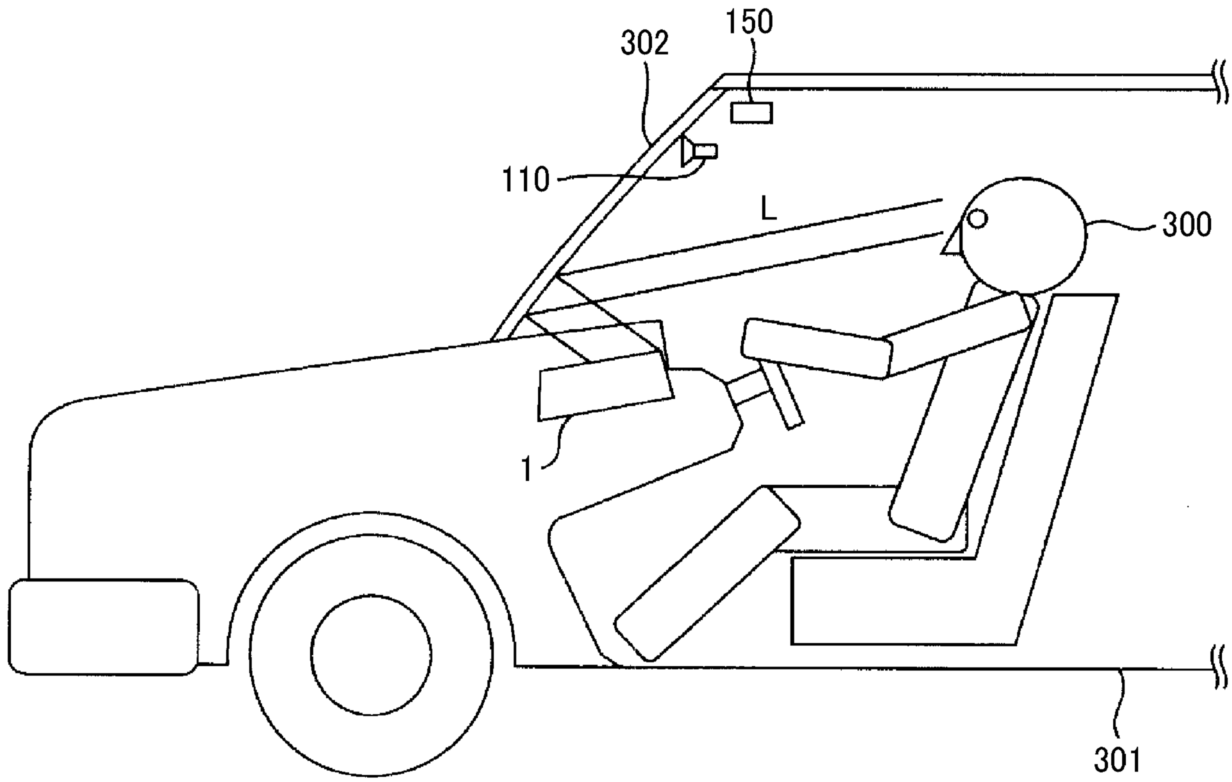

FIG. 3

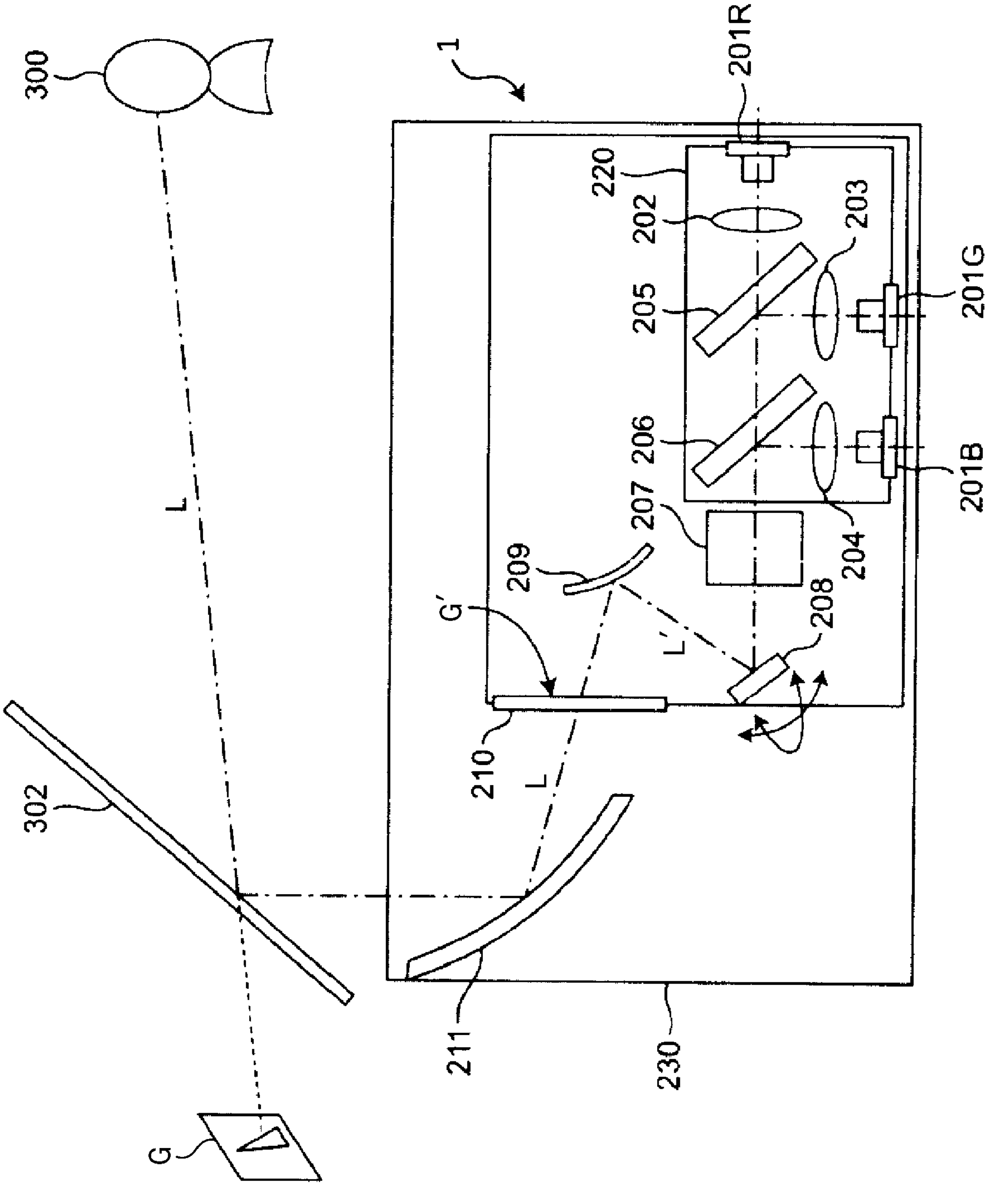
300
1
201R
220
202
203
205
201G
206
201B
207
204
209
G′
208
L′
L
210
L
302
211
230
G

FIG. 4

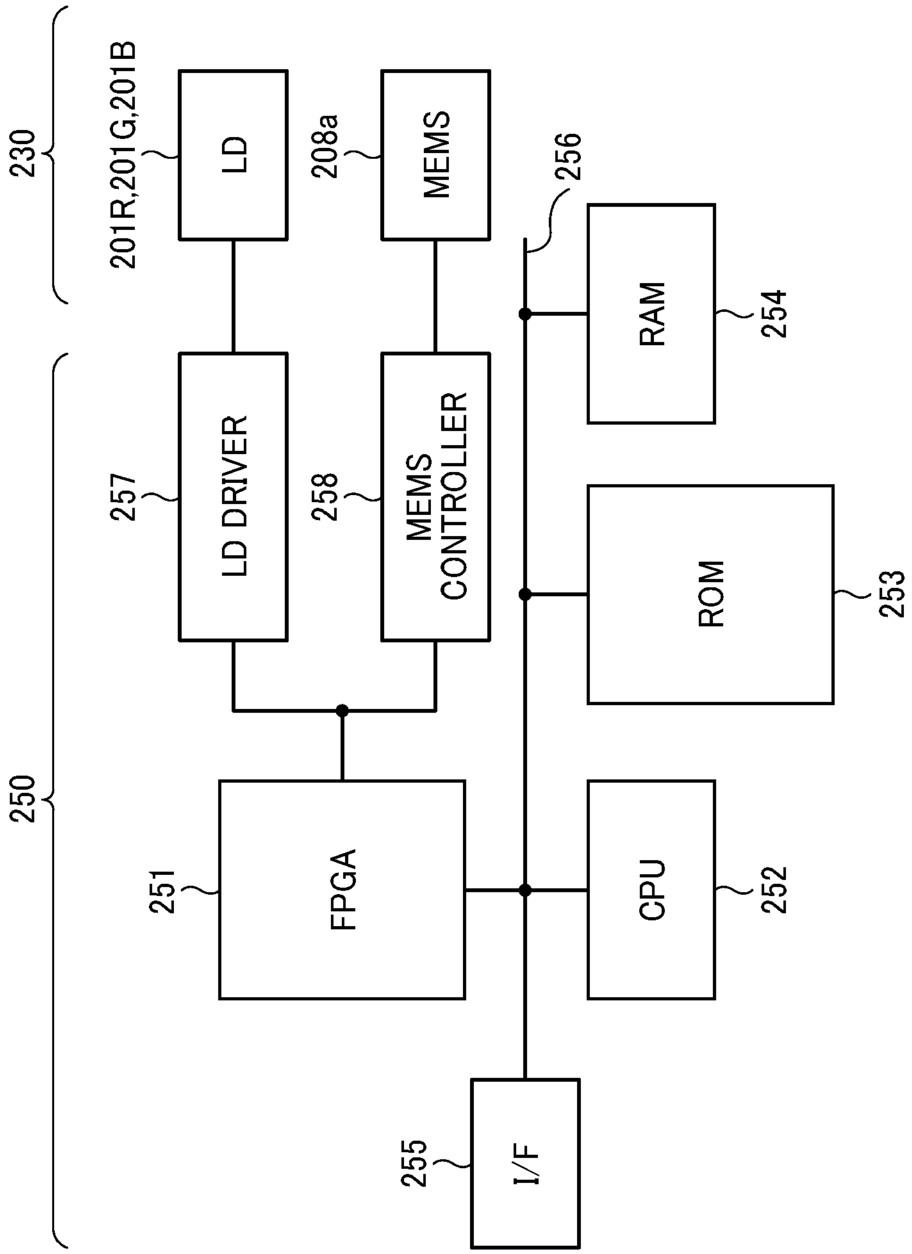
230
201R,201G,201B
LD
208a
MEMS
256
RAM
254
250
257
LD DRIVER
258
MEMS CONTROLLER
ROM
253
251
FPGA
CPU
252
255
I/F

FIG. 5

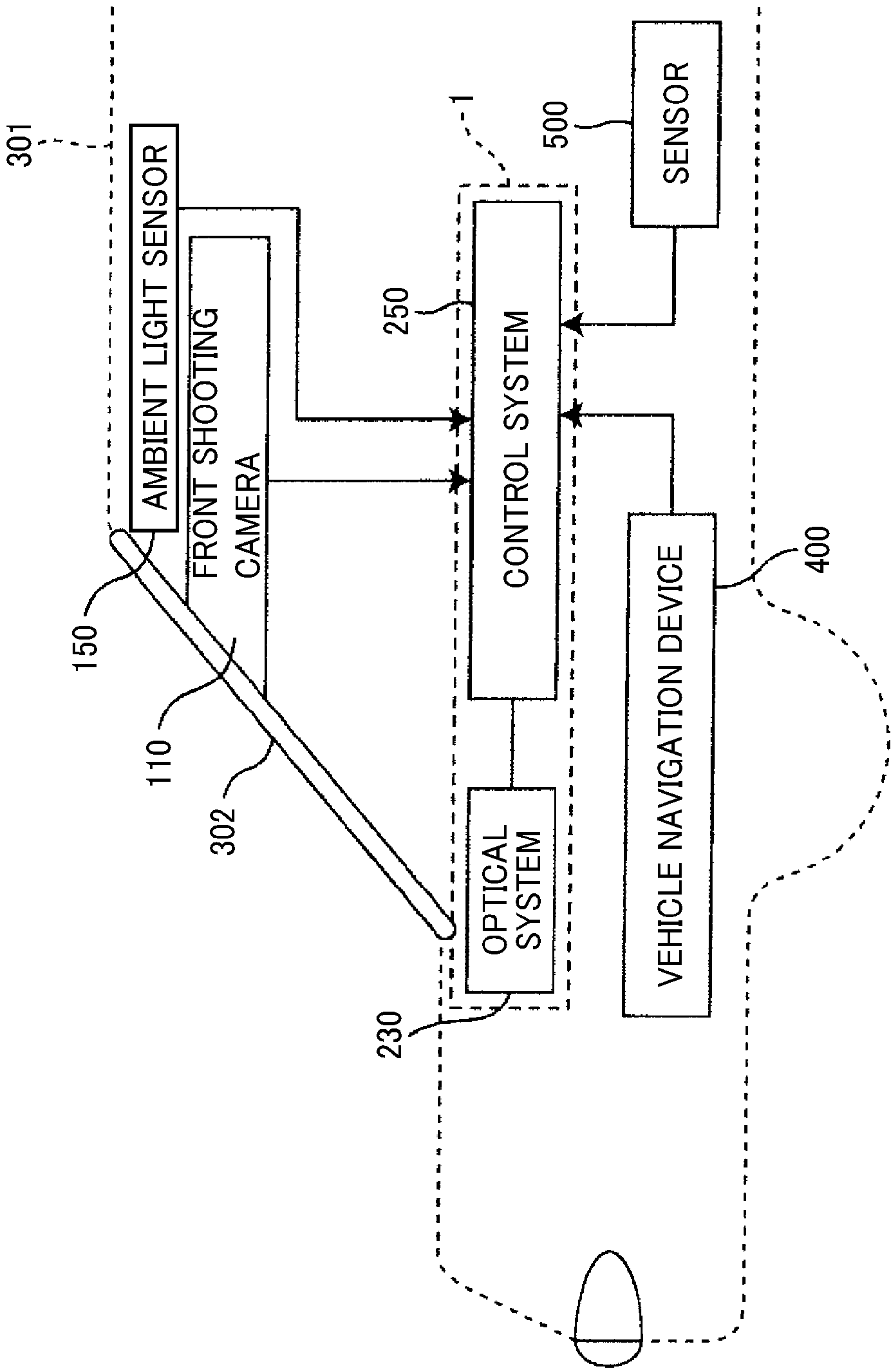

301
AMBIENT LIGHT SENSOR
FRONT SHOOTING CAMERA
150
110
302
1
250
CONTROL SYSTEM
OPTICAL SYSTEM
230
500
SENSOR
VEHICLE NAVIGATION DEVICE
400

FIG. 6

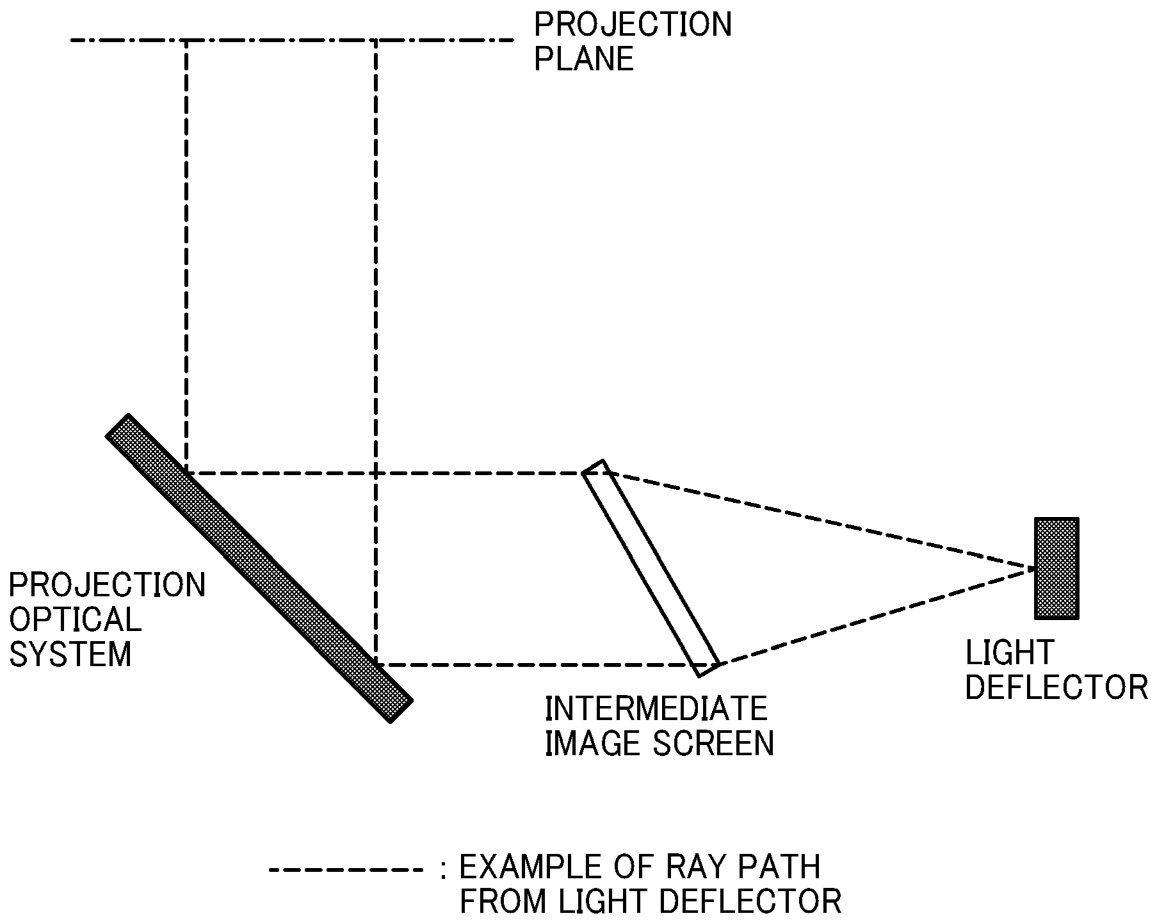
PROJECTION
PLANE
PROJECTION
OPTICAL
SYSTEM
INTERMEDIATE
IMAGE SCREEN
LIGHT
DEFLECTOR
: EXAMPLE OF RAY PATH
FROM LIGHT DEFLECTOR

FIG. 7

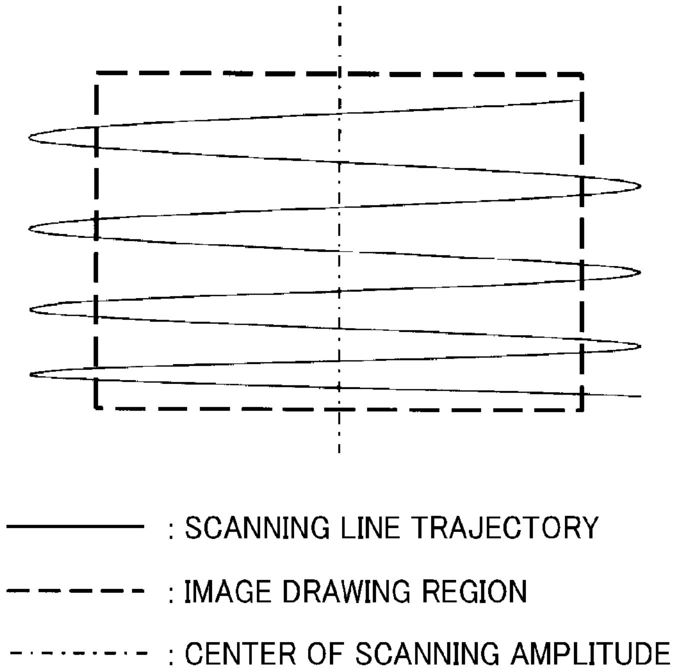
: SCANNING LINE TRAJECTORY
: IMAGE DRAWING REGION
: CENTER OF SCANNING AMPLITUDE

FIG. 8

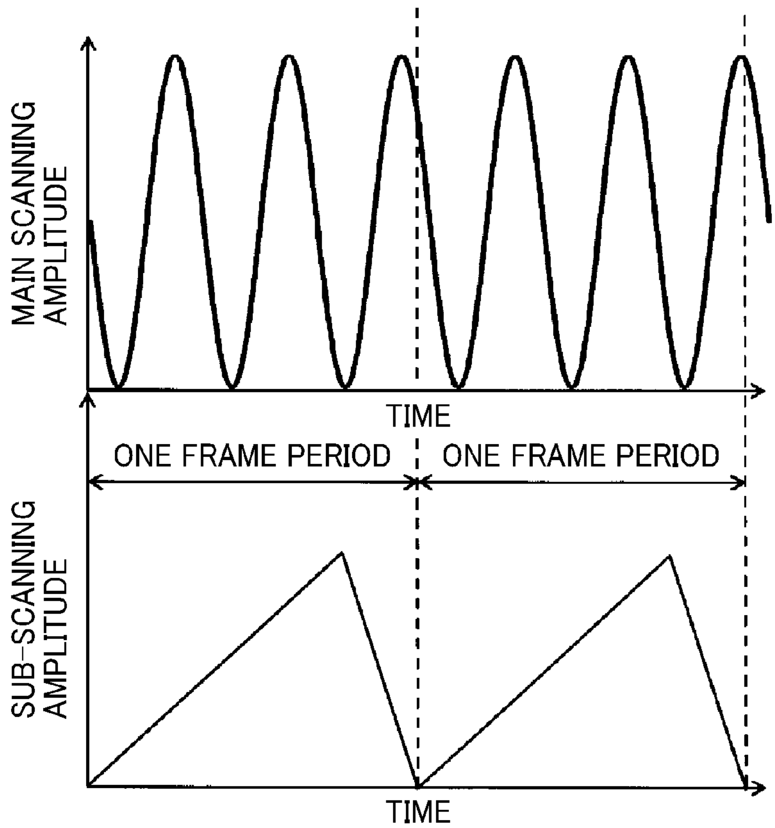
MAIN SCANNING AMPLITUDE
TIME
ONE FRAME PERIOD
ONE FRAME PERIOD
SUB-SCANNING AMPLITUDE
TIME

FIG. 9

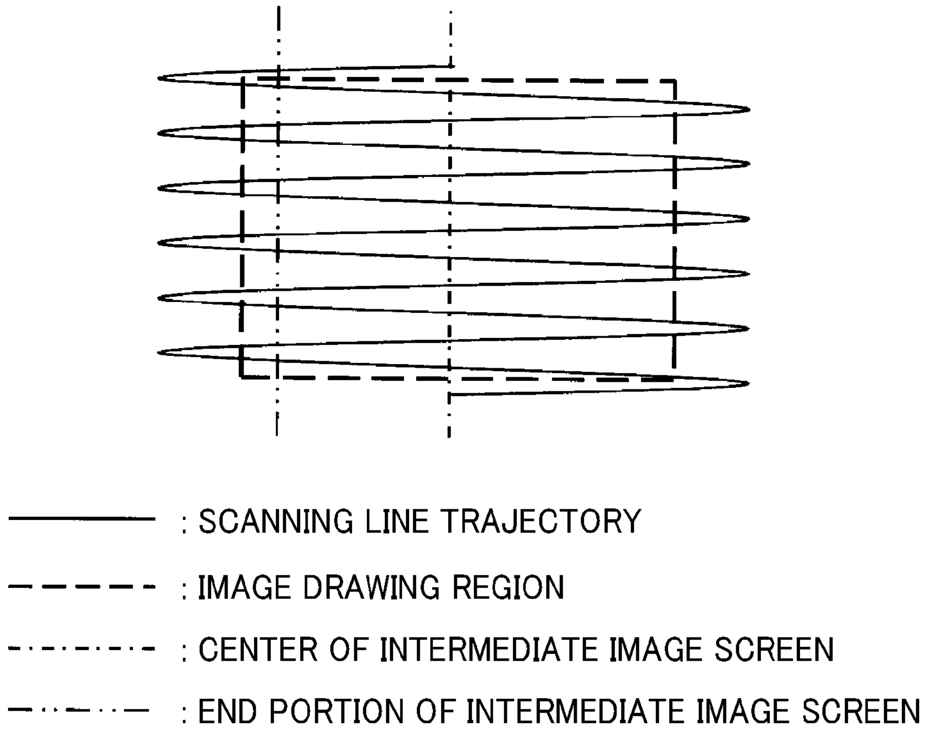

: SCANNING LINE TRAJECTORY
: IMAGE DRAWING REGION
: CENTER OF INTERMEDIATE IMAGE SCREEN
: END PORTION OF INTERMEDIATE IMAGE SCREEN

FIG. 10

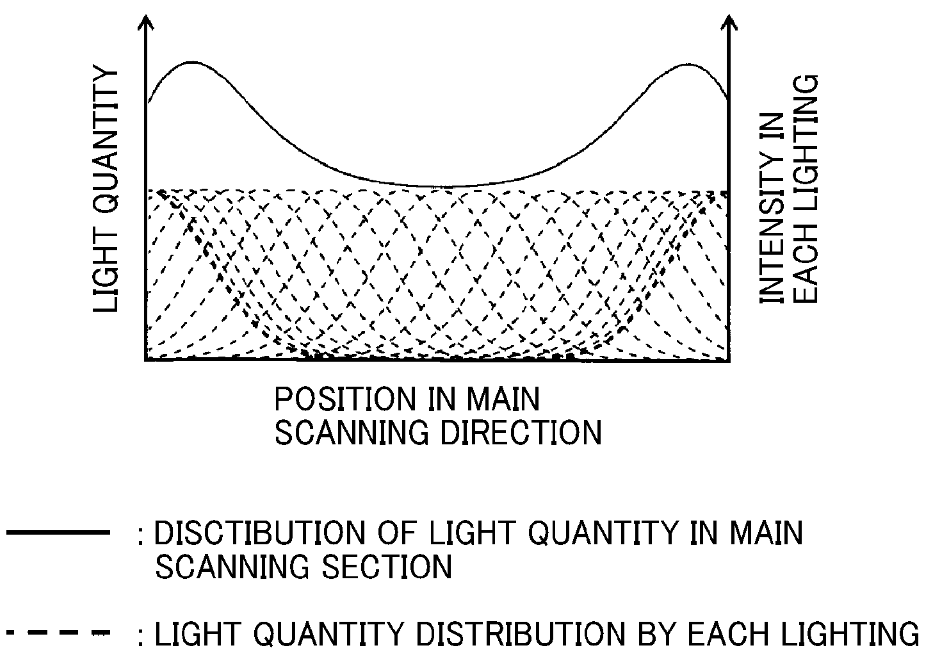

LIGHT QUANTITY
INTENSITY IN EACH LIGHTING
POSITION IN MAIN SCANNING DIRECTION
: DISCTIBUTION OF LIGHT QUANTITY IN MAIN SCANNING SECTION
: LIGHT QUANTITY DISTRIBUTION BY EACH LIGHTING

FIG. 11

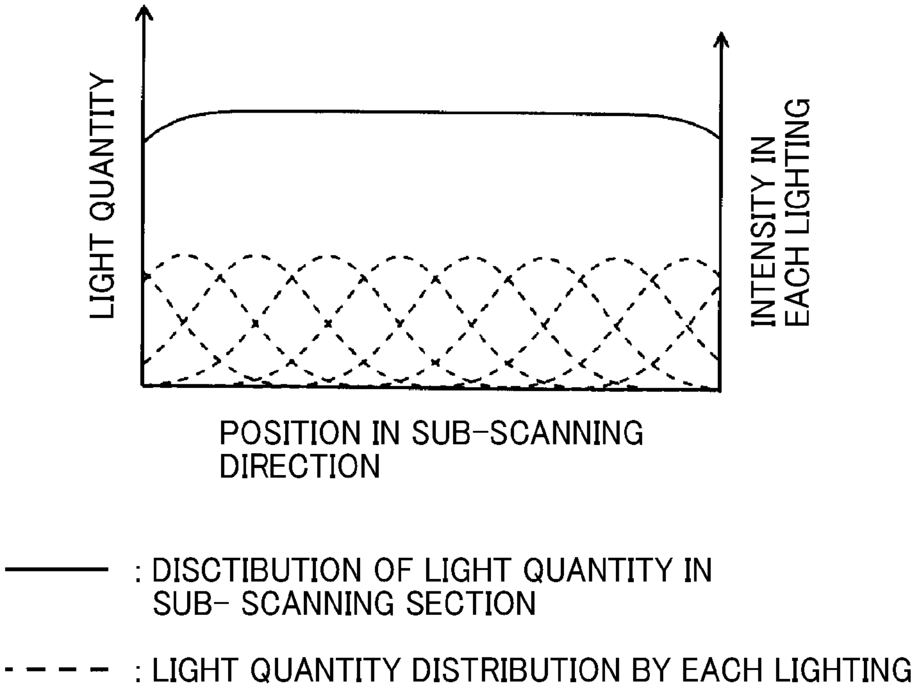
LIGHT QUANTITY
INTENSITY IN EACH LIGHTING
POSITION IN SUB-SCANNING DIRECTION
: DISCTIBUTION OF LIGHT QUANTITY IN SUB- SCANNING SECTION
: LIGHT QUANTITY DISTRIBUTION BY EACH LIGHTING

FIG. 12

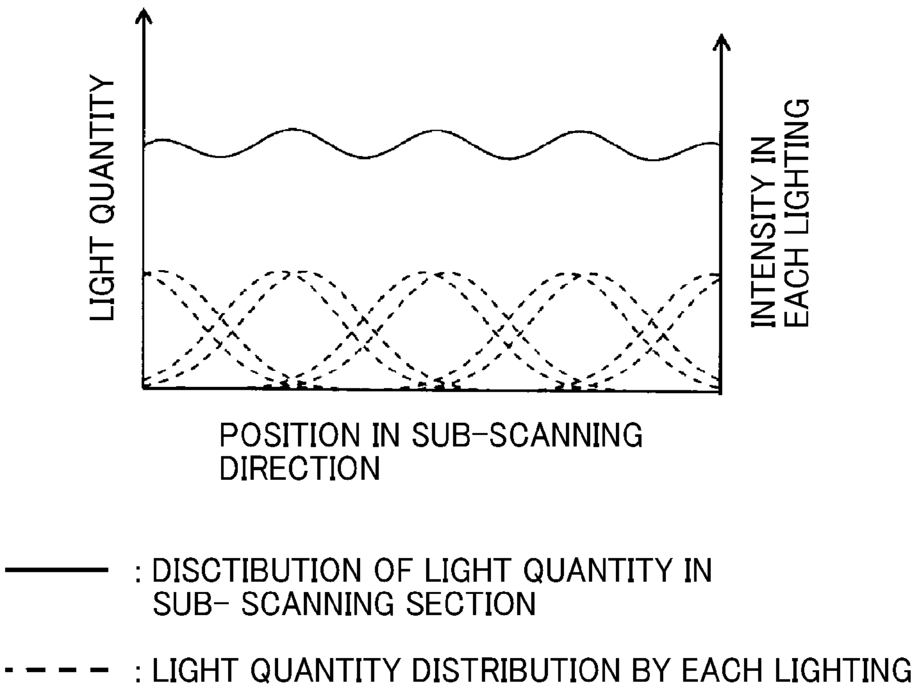
LIGHT QUANTITY
INTENSITY IN EACH LIGHTING
POSITION IN SUB-SCANNING DIRECTION
: DISCTIBUTION OF LIGHT QUANTITY IN SUB- SCANNING SECTION
: LIGHT QUANTITY DISTRIBUTION BY EACH LIGHTING

FIG. 13

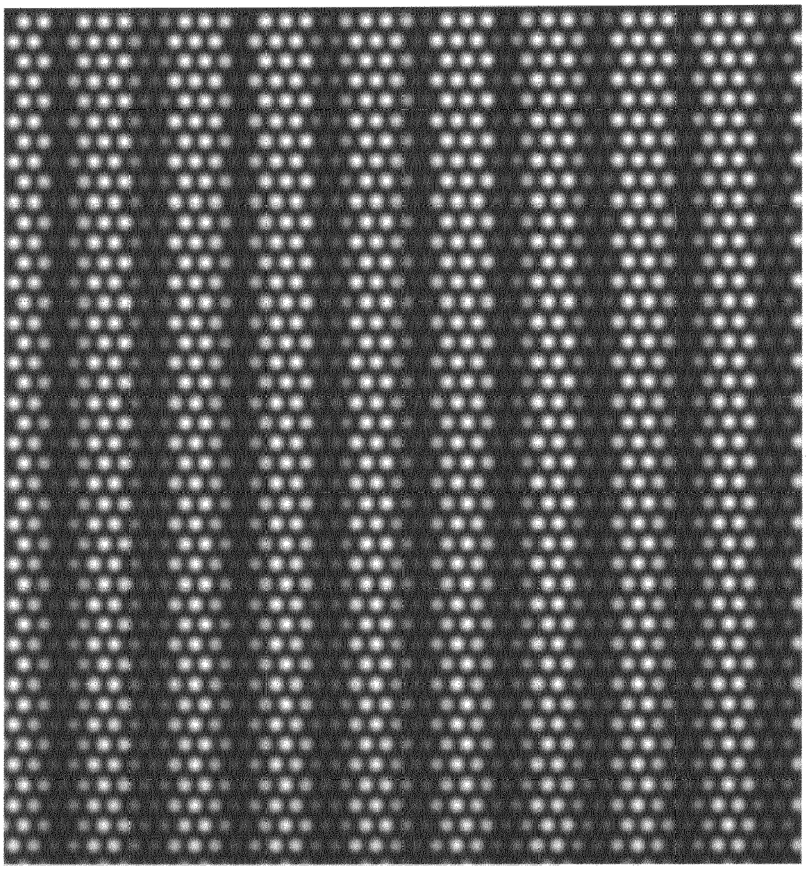

FIG. 14

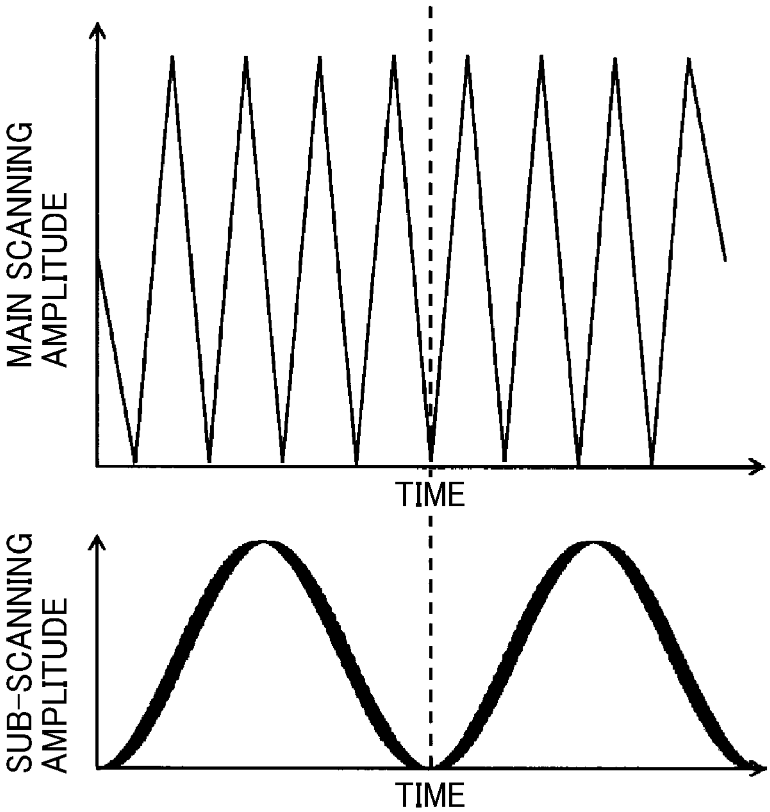

FIG. 15

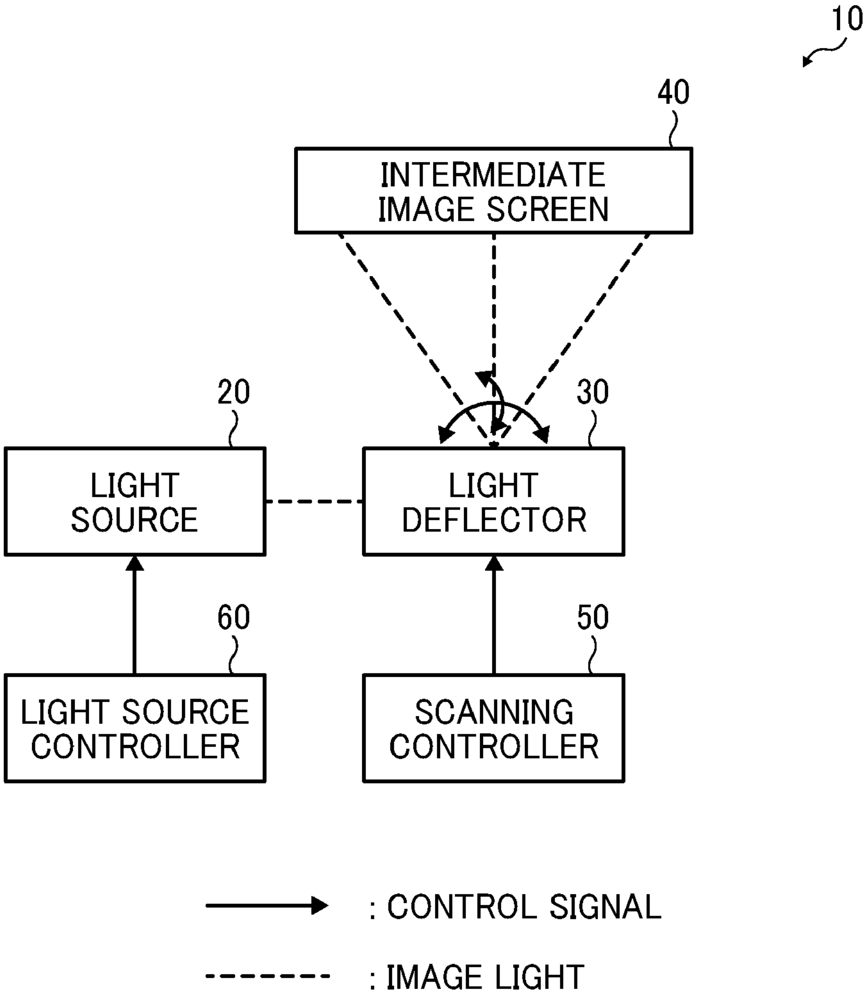
10
40
INTERMEDIATE IMAGE SCREEN
20
30
LIGHT SOURCE
LIGHT DEFLECTOR
60
50
LIGHT SOURCE CONTROLLER
SCANNING CONTROLLER
: CONTROL SIGNAL
: IMAGE LIGHT

# FIG. 16

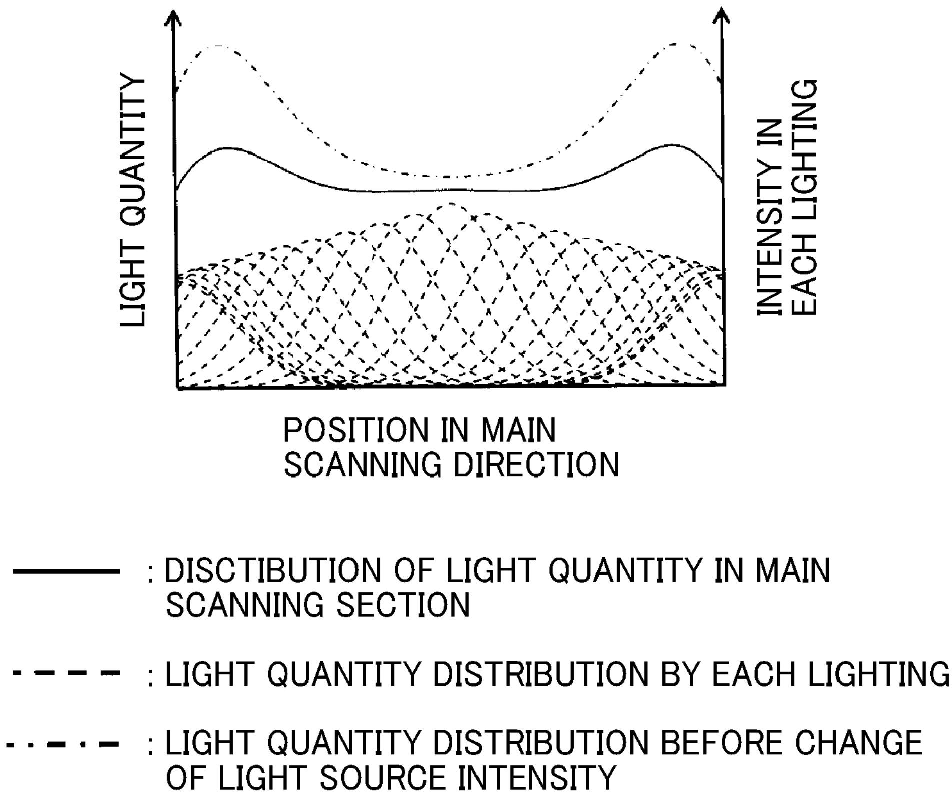
LIGHT QUANTITY
INTENSITY IN
EACH LIGHTING
POSITION IN MAIN
SCANNING DIRECTION
: DISCTIBUTION OF LIGHT QUANTITY IN MAIN
SCANNING SECTION
: LIGHT QUANTITY DISTRIBUTION BY EACH LIGHTING
: LIGHT QUANTITY DISTRIBUTION BEFORE CHANGE
OF LIGHT SOURCE INTENSITY

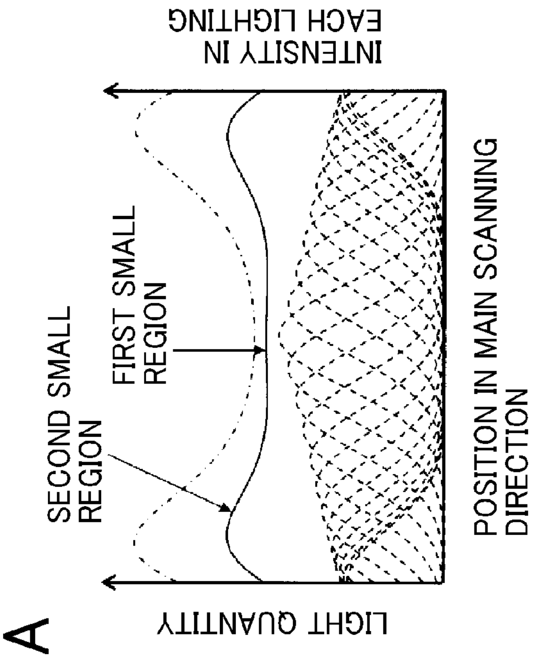


FIG. 17A

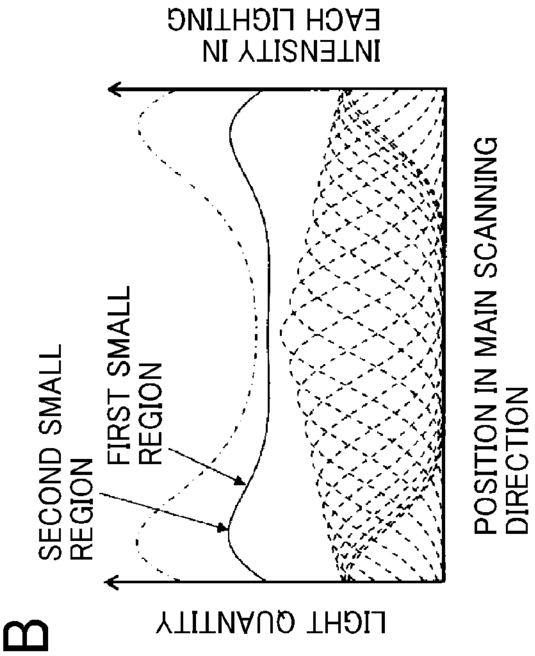


FIG. 17B

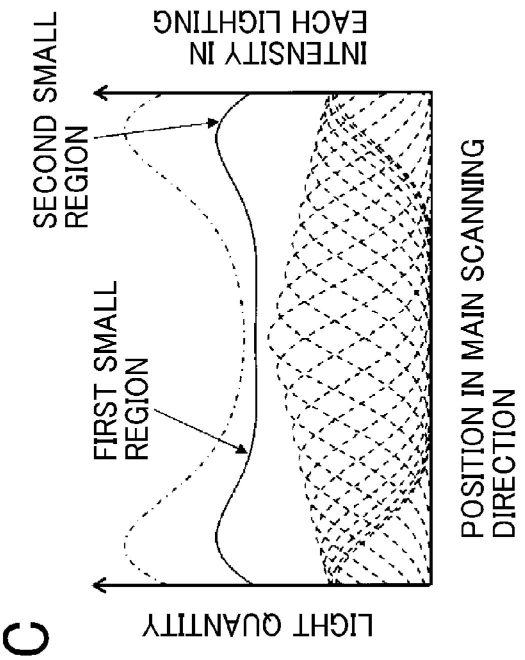


FIG. 17C

FIG. 18

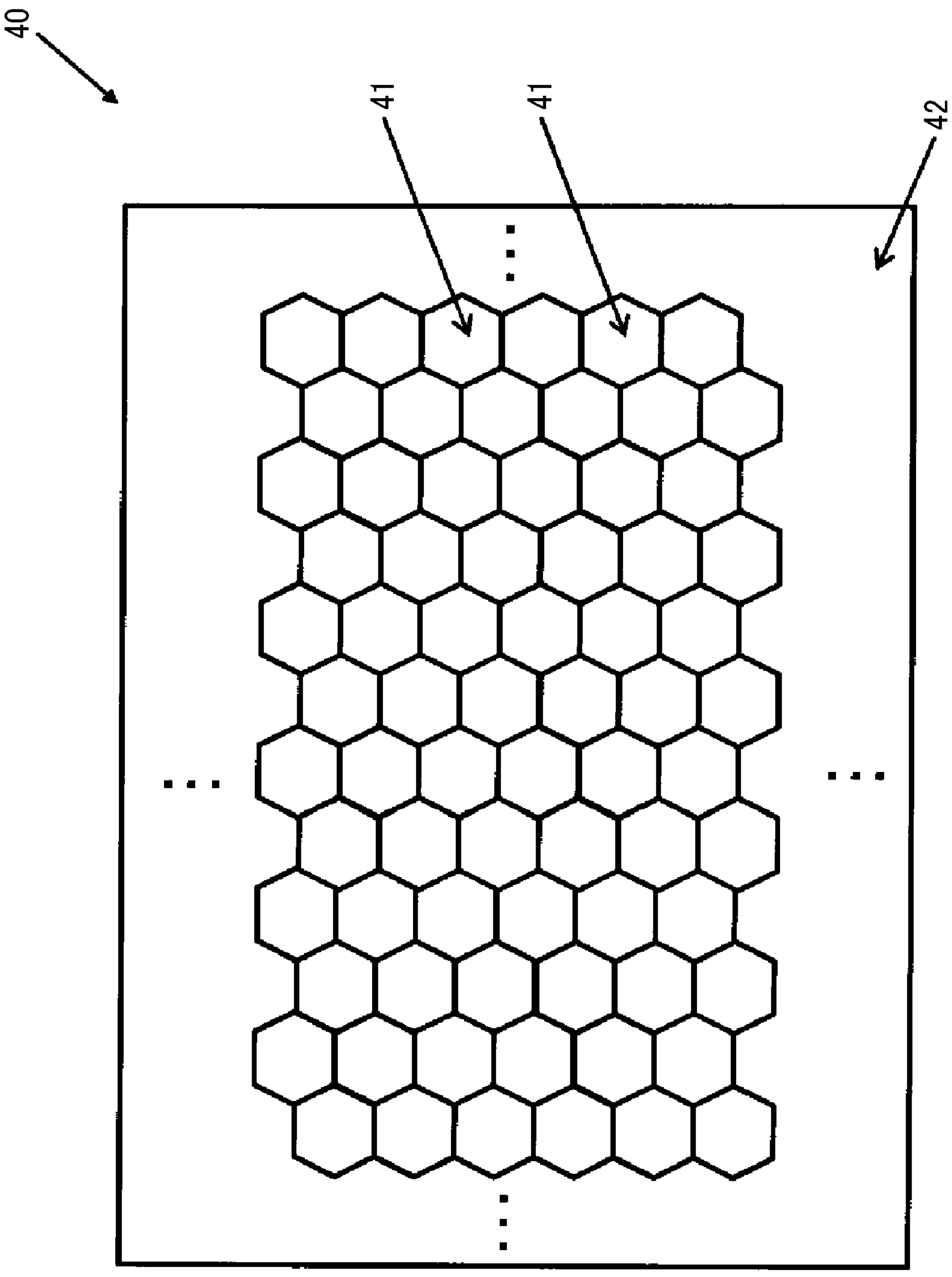

FIG. 19

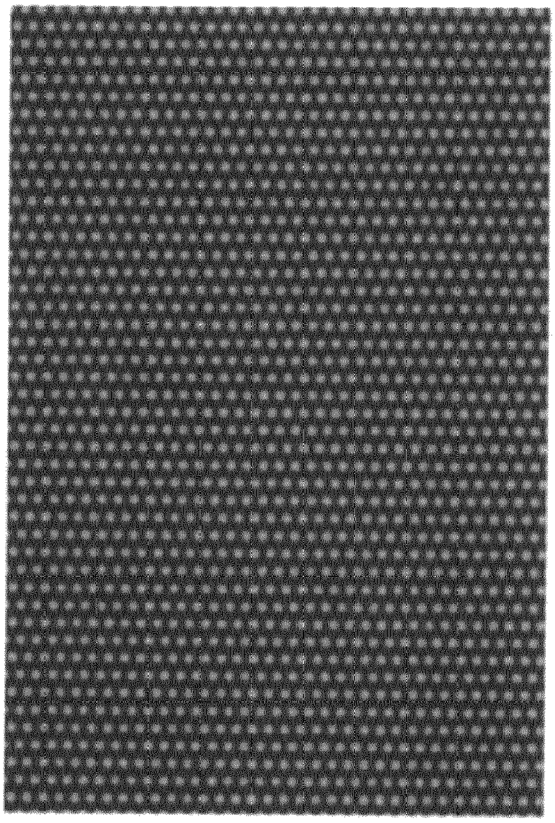

FIG. 20

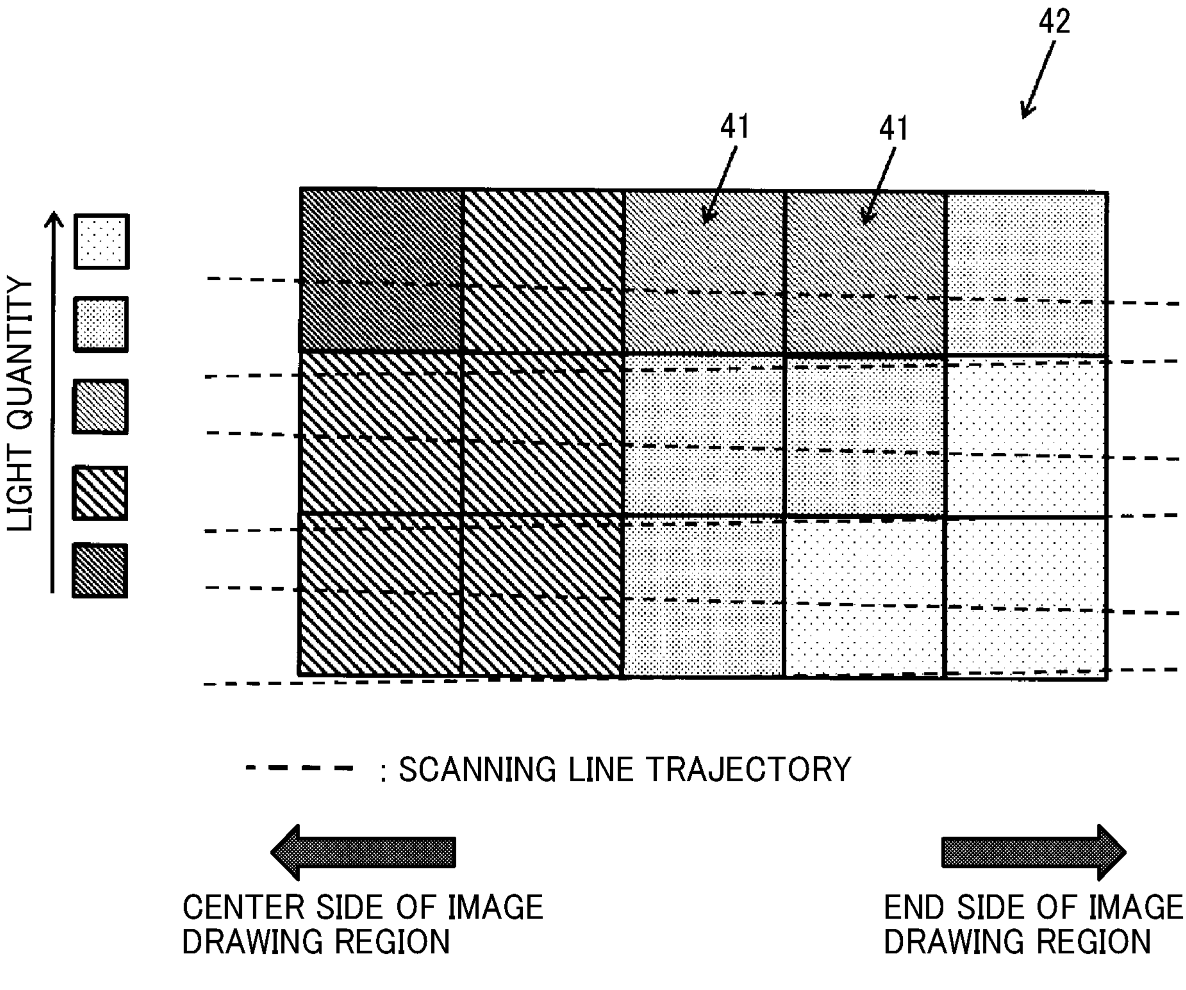
42
41
41
LIGHT QUANTITY
: SCANNING LINE TRAJECTORY
CENTER SIDE OF IMAGE DRAWING REGION
END SIDE OF IMAGE DRAWING REGION

# FIG. 21A

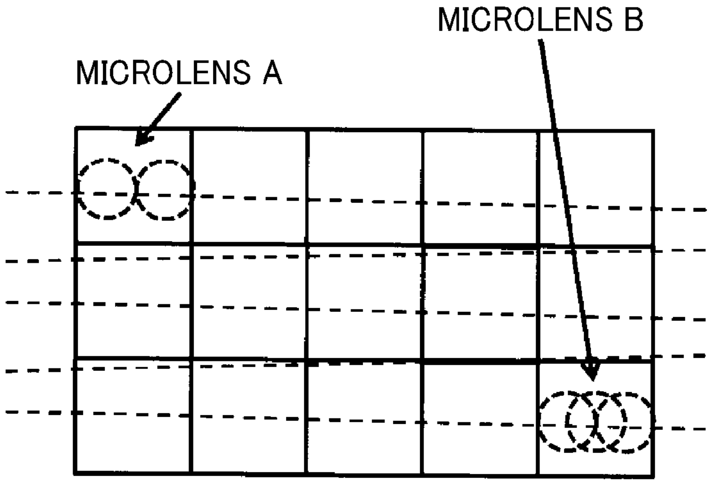


: SCANNING LINE TRAJECTORY

: SPOT OF LIGHT FROM LIGHT SOURCE VIA LIGHT DEFLECTOR

# FIG. 21B

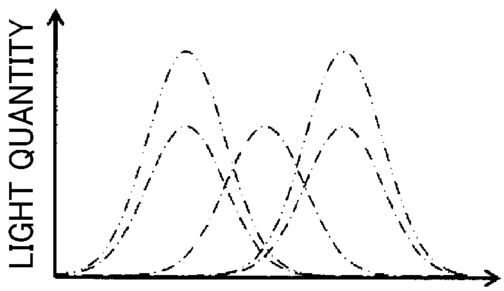


: DISTRIBUTION OF LIQHT AMOUNT BY EACH LIGHTING ON MICROLENS ARRAY A

: DISTRIBUTION OF LIQHT AMOUNT BY EACH LIGHTING ON MICROLENS ARRAY B

FIG. 22

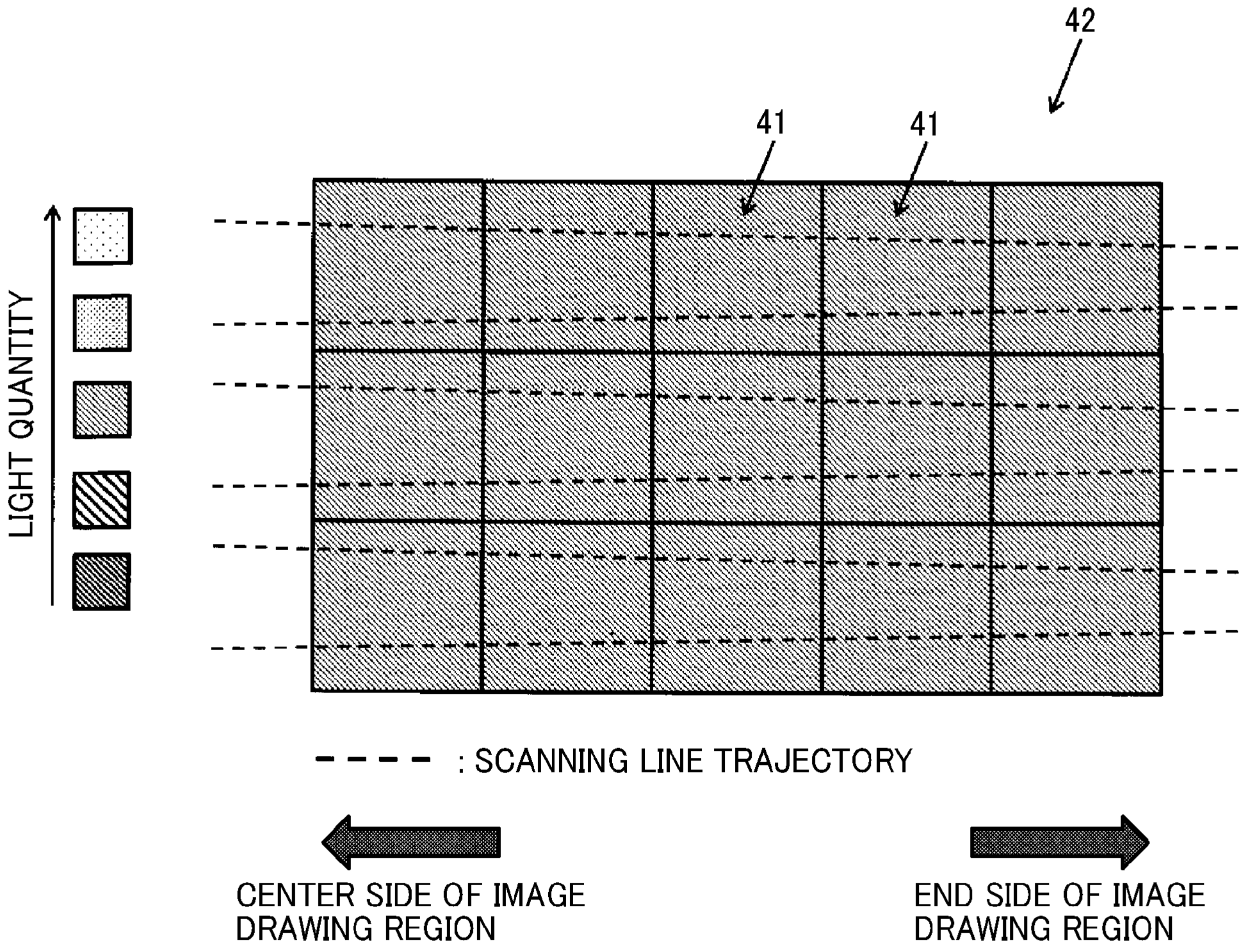
42
41
41
LIGHT QUANTITY
: SCANNING LINE TRAJECTORY
CENTER SIDE OF IMAGE DRAWING REGION
END SIDE OF IMAGE DRAWING REGION

FIG. 23

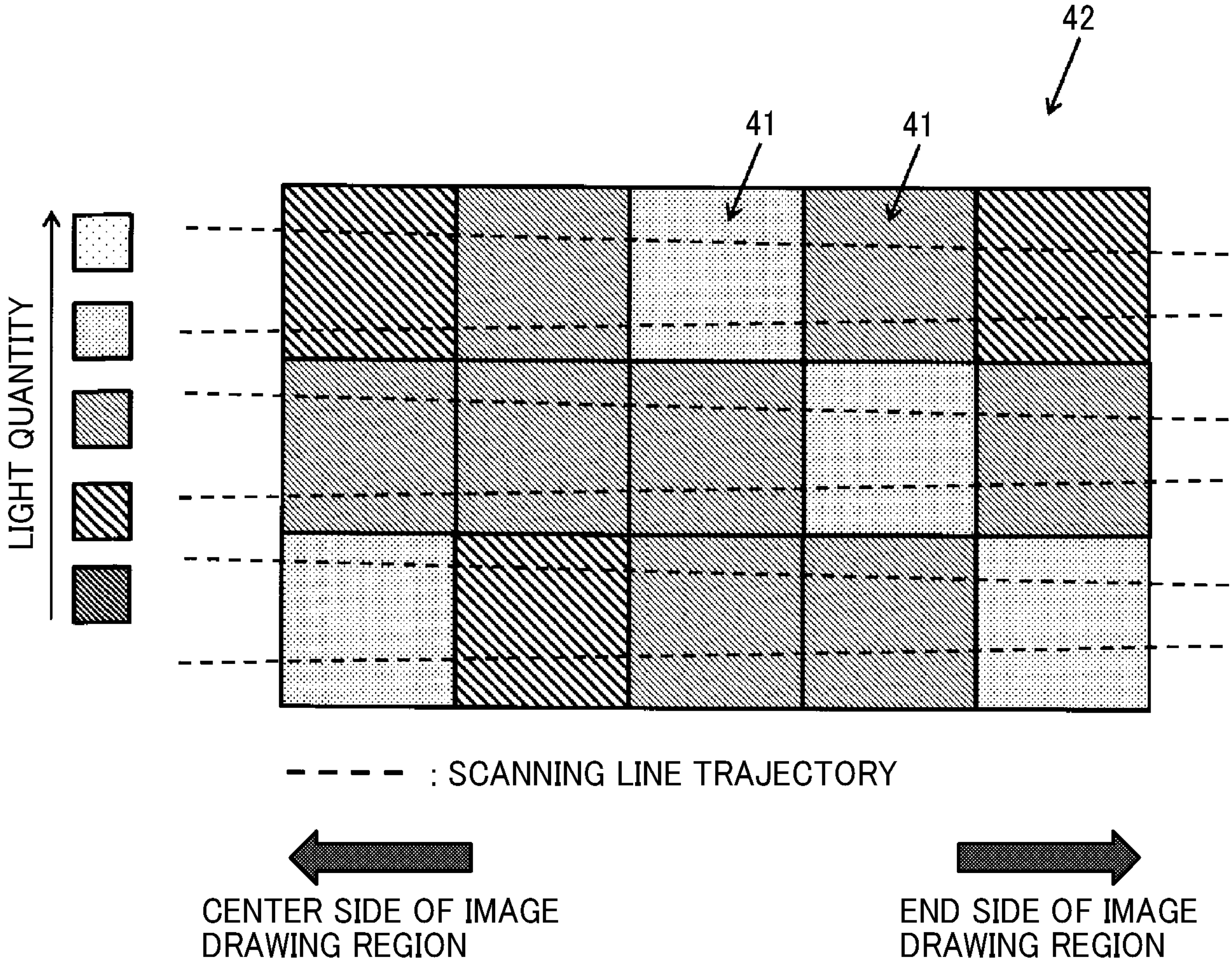
42
41
41
LIGHT QUANTITY
- - - - : SCANNING LINE TRAJECTORY
CENTER SIDE OF IMAGE DRAWING REGION
END SIDE OF IMAGE DRAWING REGION

FIG. 24

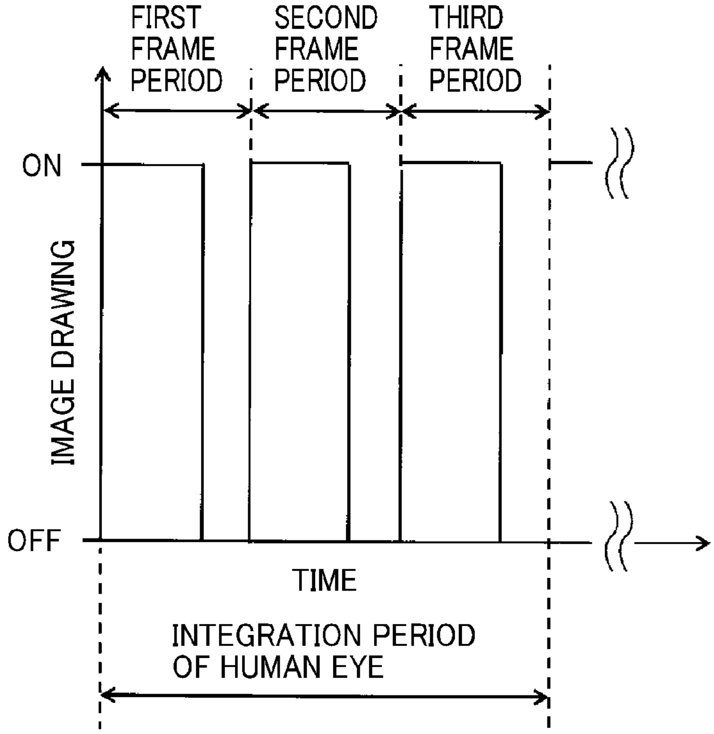
FIRST
FRAME
PERIOD
SECOND
FRAME
PERIOD
THIRD
FRAME
PERIOD
ON
IMAGE DRAWING
OFF
TIME
INTEGRATION PERIOD
OF HUMAN EYE

FIG. 25

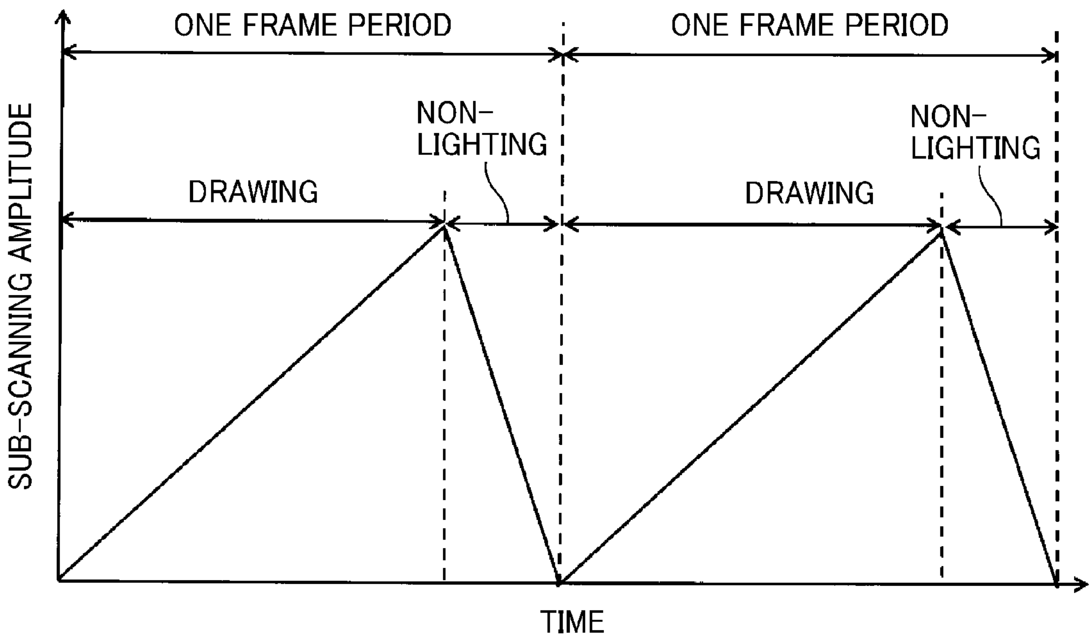
ONE FRAME PERIOD
ONE FRAME PERIOD
NON-
LIGHTING
NON-
LIGHTING
DRAWING
DRAWING
SUB-SCANNING AMPLITUDE
TIME

FIG. 26

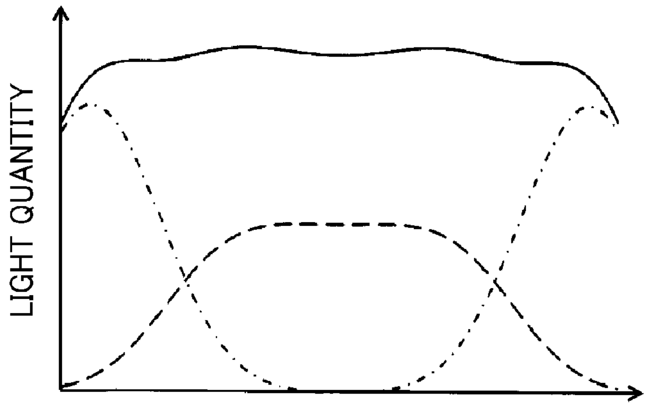


———— : DISTRIBUTION OF CUMULATIVE LIQHT AMOUNT IN FIRST TO THIRD FRAME PERIODS

- - - - : DISTRIBUTION OF LIQHT AMOUNT IN FIRST AND THIRD FRAME PERIODS

— · — · — : DISTRIBUTION OF LIQHT AMOUNT IN SECOND FRAME PERIOD

FIG. 27

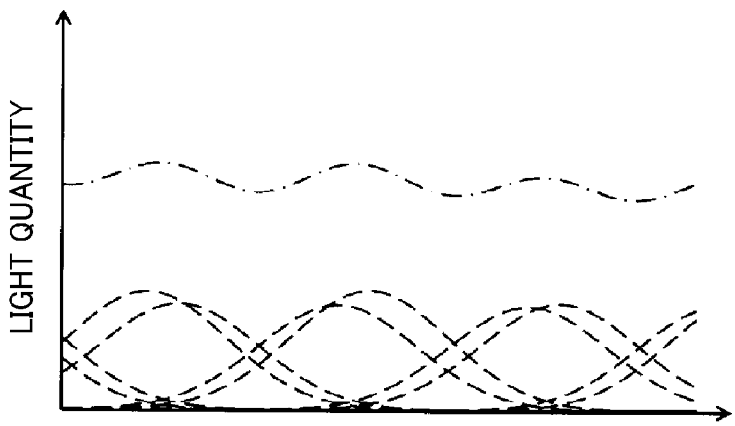


— — — — — : INTENSITY DISTRIBUTION FOR EACH SCANNING LINE WITH RANDOMLY CHANGED INTENSITY

- · - · - · - · - : INTENSITY DISTRIBUTION OF SUM OF SCANNING LINES IN SUB-SCANNING SECTION

FIG. 28

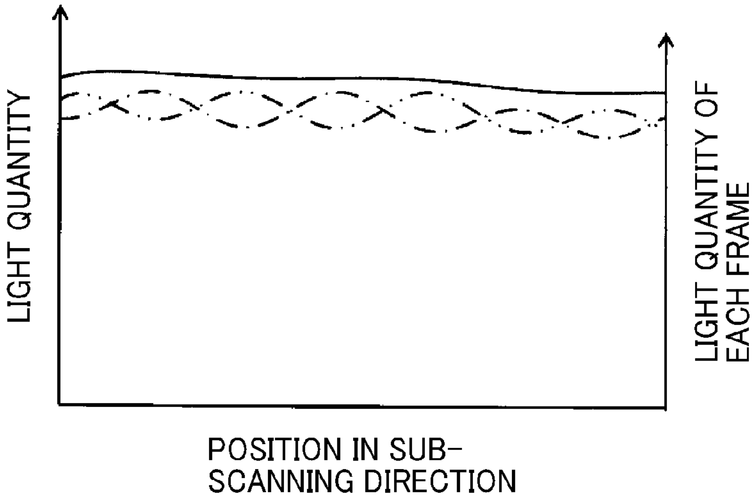


: LIGHT QUANTITY DISTRIBUTION IN MAIN SCANNING SECTION

: LIGHT QUANTITY DISTRIBUTION IN FIRST FRAME PERIOD

: LIGHT QUANTITY DISTRIBUTION IN SECOND FRAME PERIOD

FIG. 29

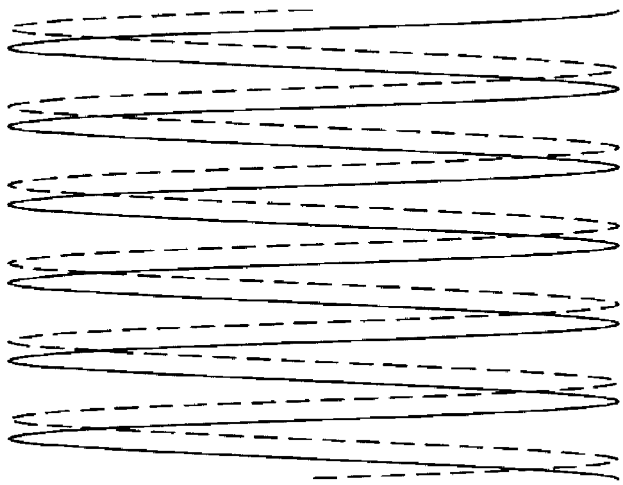

: SCANNING LINE TRAJECTORY IN FIRST FRAME PERIOD

: SCANNING LINE TRAJECTORY IN SECOND FRAME PERIOD

FIG. 30

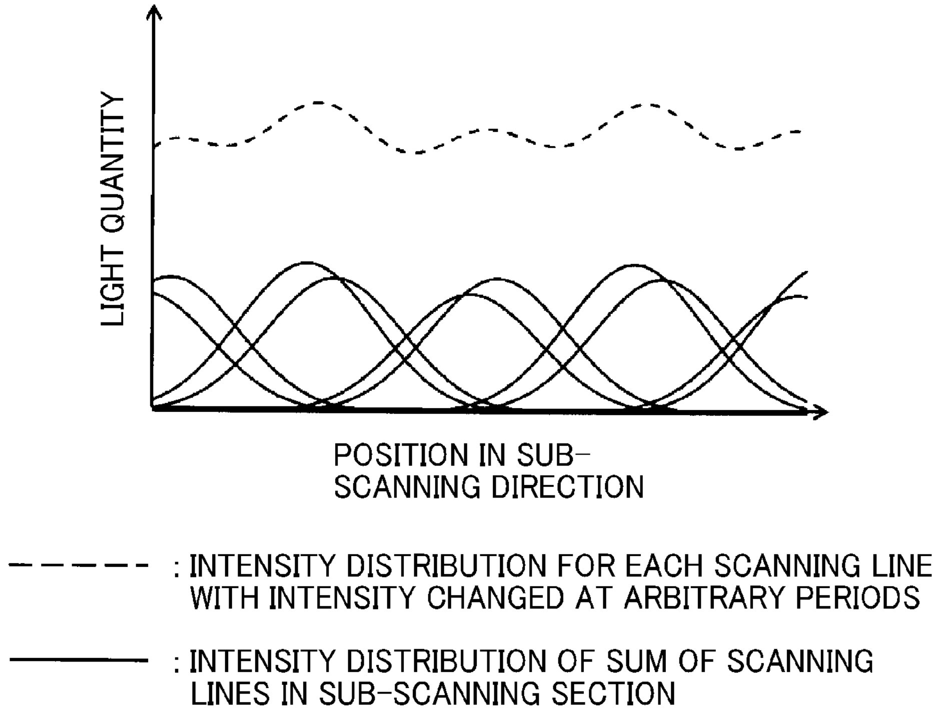
LIGHT QUANTITY
POSITION IN SUB-
SCANNING DIRECTION
: INTENSITY DISTRIBUTION FOR EACH SCANNING LINE
WITH INTENSITY CHANGED AT ARBITRARY PERIODS
: INTENSITY DISTRIBUTION OF SUM OF SCANNING
LINES IN SUB-SCANNING SECTION

FIG. 31

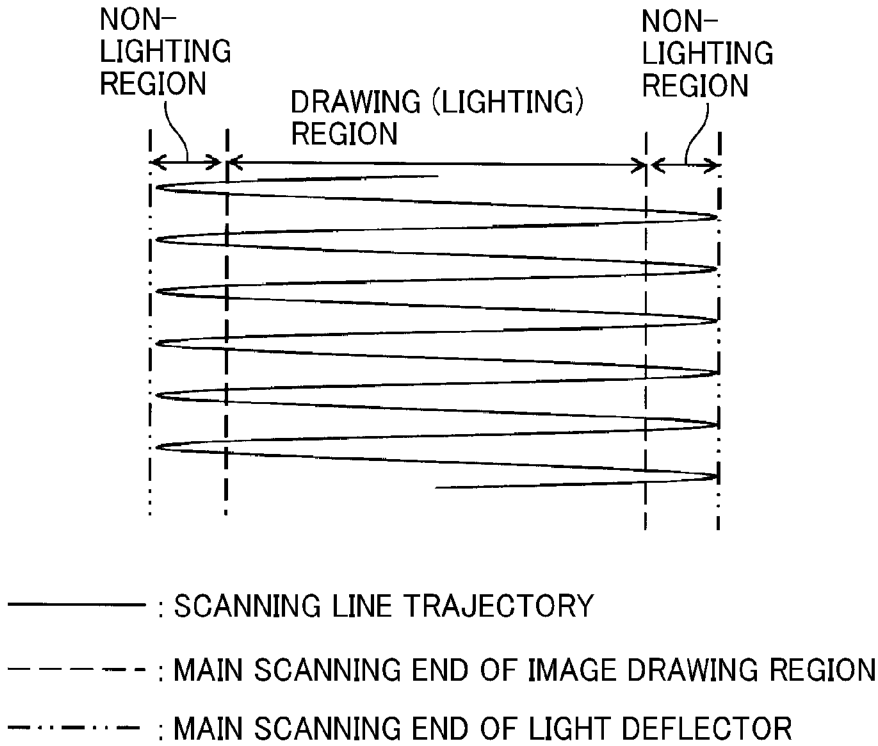
NON-
LIGHTING
REGION
DRAWING (LIGHTING)
REGION
NON-
LIGHTING
REGION
: SCANNING LINE TRAJECTORY
: MAIN SCANNING END OF IMAGE DRAWING REGION
: MAIN SCANNING END OF LIGHT DEFLECTOR

FIG. 32

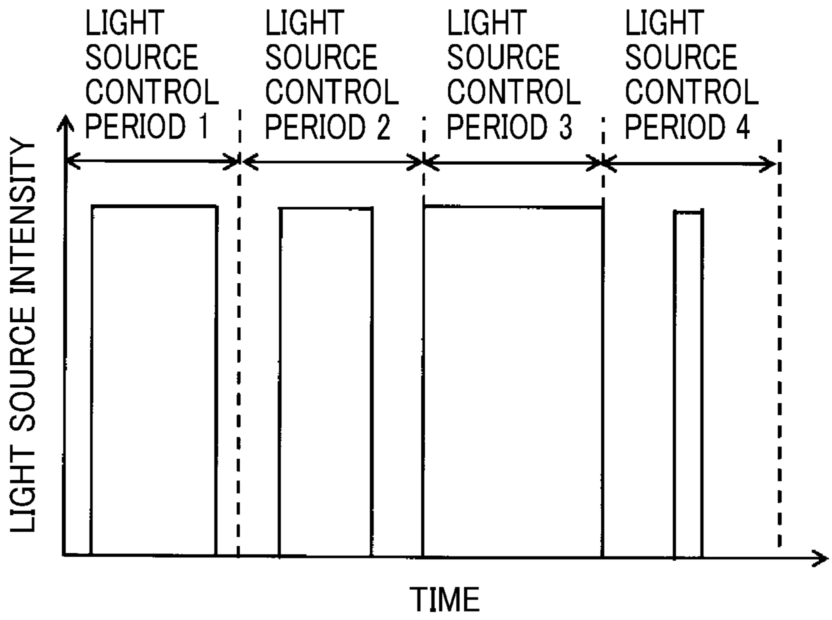
LIGHT SOURCE CONTROL PERIOD 1
LIGHT SOURCE CONTROL PERIOD 2
LIGHT SOURCE CONTROL PERIOD 3
LIGHT SOURCE CONTROL PERIOD 4
LIGHT SOURCE INTENSITY
TIME

FIG. 33

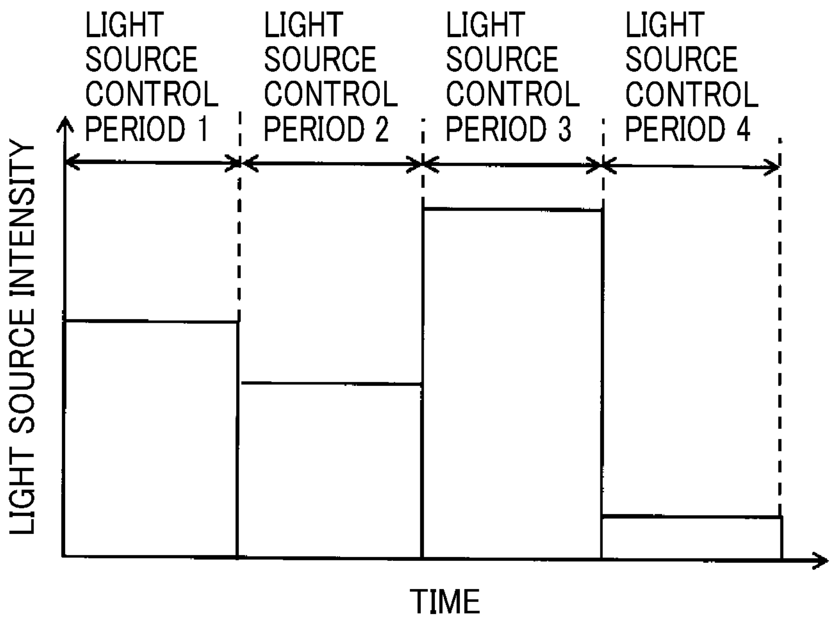
LIGHT SOURCE CONTROL PERIOD 1
LIGHT SOURCE CONTROL PERIOD 2
LIGHT SOURCE CONTROL PERIOD 3
LIGHT SOURCE CONTROL PERIOD 4
LIGHT SOURCE INTENSITY
TIME

FIG. 34

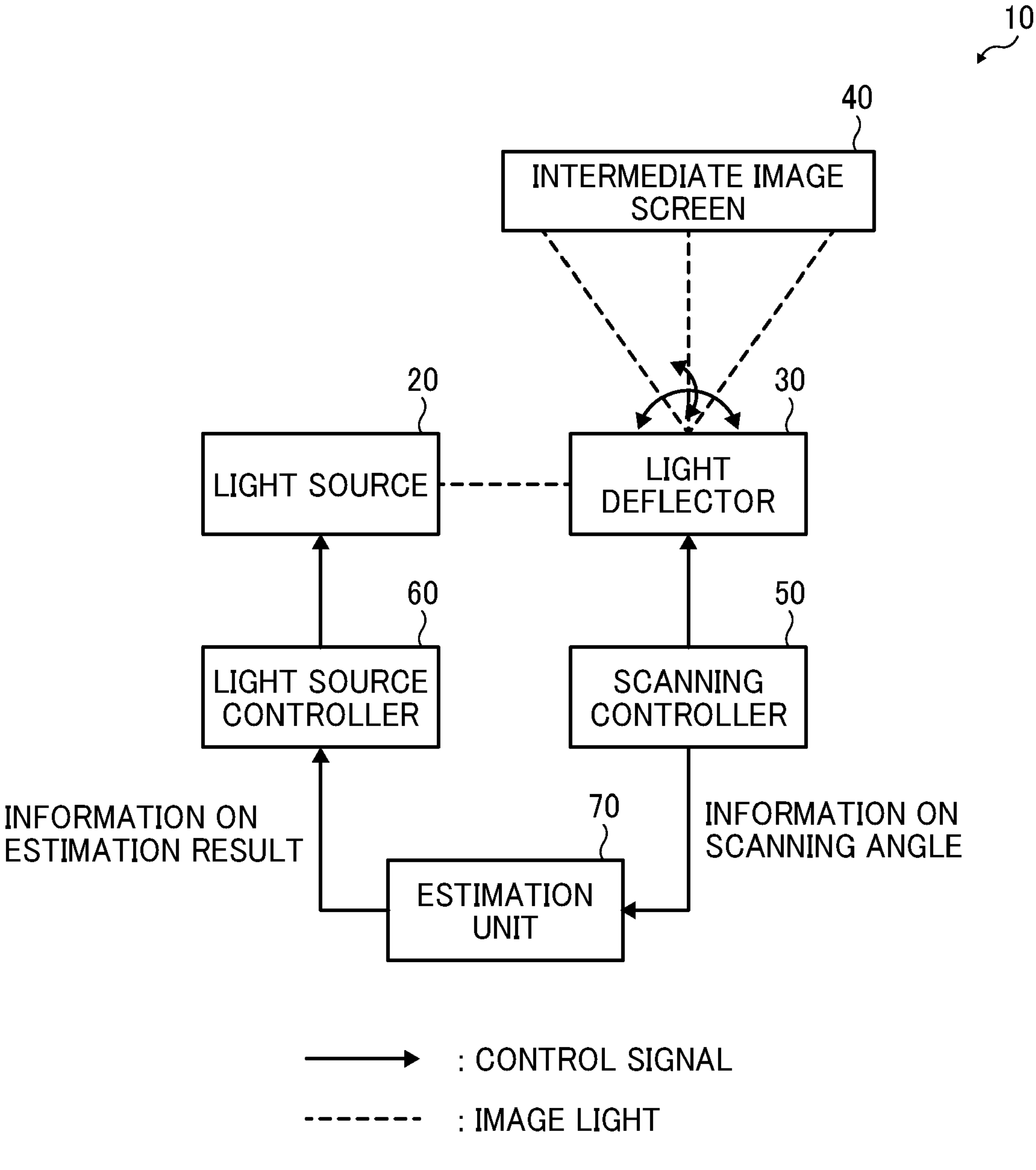
10
40
INTERMEDIATE IMAGE SCREEN
20
30
LIGHT SOURCE
LIGHT DEFLECTOR
60
50
LIGHT SOURCE CONTROLLER
SCANNING CONTROLLER
70
INFORMATION ON ESTIMATION RESULT
INFORMATION ON SCANNING ANGLE
ESTIMATION UNIT
: CONTROL SIGNAL
: IMAGE LIGHT

FIG. 35

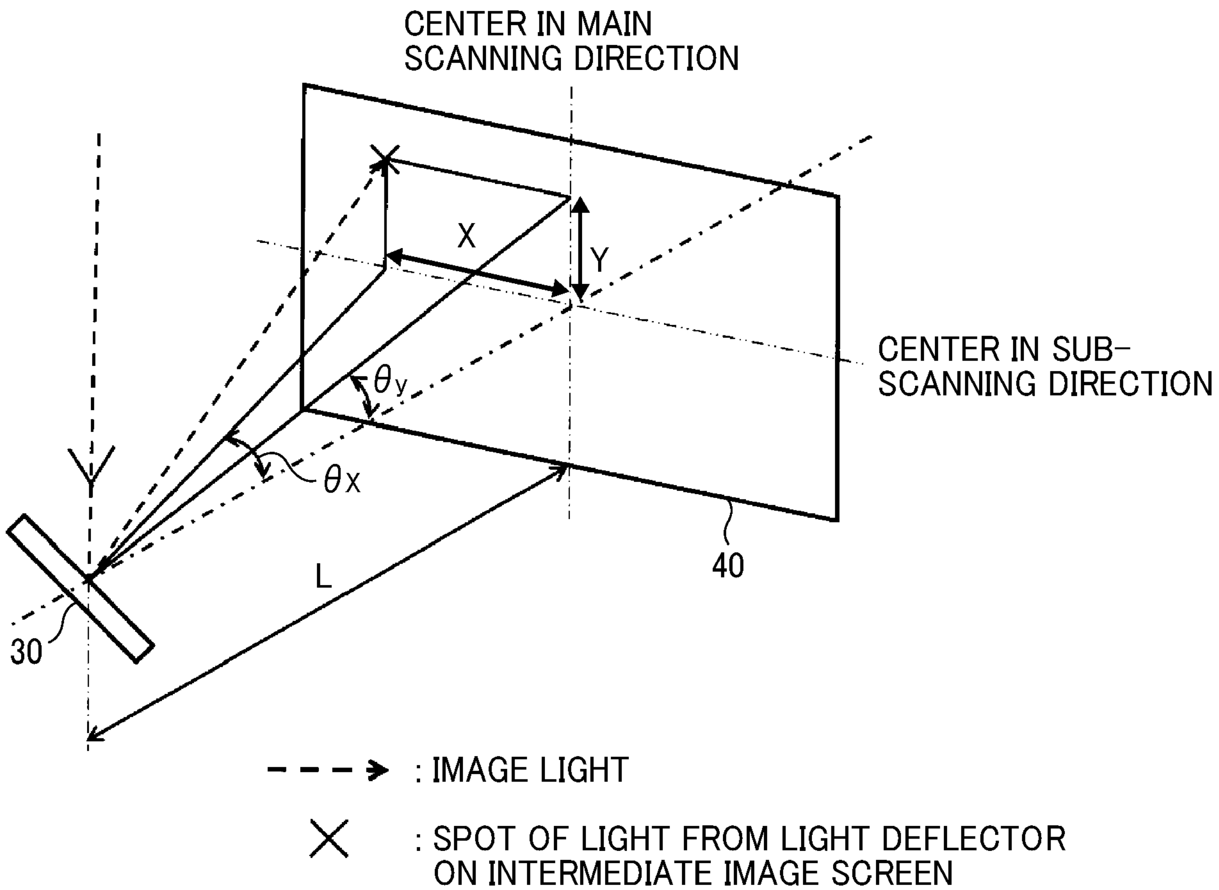
CENTER IN MAIN
SCANNING DIRECTION
X
Y
CENTER IN SUB-
SCANNING DIRECTION
θy
θx
L
40
30
: IMAGE LIGHT
: SPOT OF LIGHT FROM LIGHT DEFLECTOR
ON INTERMEDIATE IMAGE SCREEN

FIG. 36

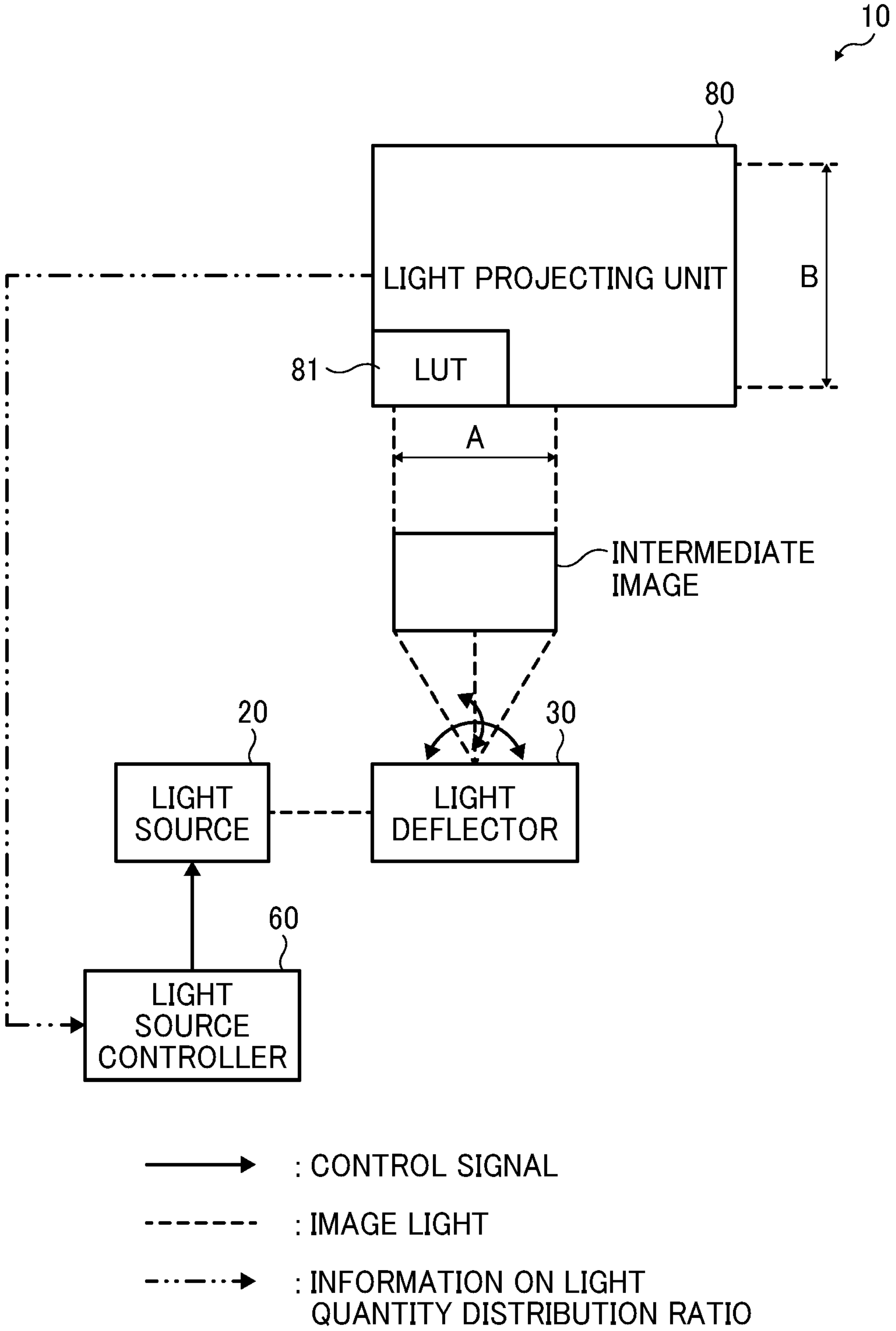
10
80
LIGHT PROJECTING UNIT
B
81
LUT
A
INTERMEDIATE IMAGE
20
30
LIGHT SOURCE
LIGHT DEFLECTOR
60
LIGHT SOURCE CONTROLLER
: CONTROL SIGNAL
: IMAGE LIGHT
: INFORMATION ON LIGHT QUANTITY DISTRIBUTION RATIO

Europäisches Patentamt
European Patent Office
Office européen des brevets

# EUROPEAN SEARCH REPORT

Application Number
EP 20 18 4205

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/139418 A1 (FURUYA HIROYUKI [JP] ET AL) 17 May 2018 (2018-05-17) * paragraphs [0008] - [0009], [0014], [0077] - [0078], [0081], [0106] - [0112], [0177], [0196]; figures 1A,2,8A,8B,15B * ----- | 1-15 | INV. G02B27/01 |
| X | US 2014/126590 A1 (KIMURA MOTOI [JP]) 8 May 2014 (2014-05-08) * paragraph [0004]; claim 15; figures 6A-6C,7A-7B * ----- | 1,15 | |

TECHNICAL FIELDS SEARCHED (IPC)

G02B

The present search report has been drawn up for all claims

2

| Place of search | Date of completion of the search | Examiner |
|---|---|---|
| Munich | 25 November 2020 | Pugno, Roberto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 20 18 4205

This annex lists the patent family members relating to the patent documents cited in the above-mentioned European search report. The members are as contained in the European Patent Office EDP file on
The European Patent Office is in no way liable for these particulars which are merely given for the purpose of information.

25-11-2020

| Patent document cited in search report | Publication date | Patent family member(s) | Publication date |
|---|---|---|---|
| US 2018139418 A1 | 17-05-2018 | NONE | |
| US 2014126590 A1 | 08-05-2014 | CN 103813146 A | 21-05-2014 |
| | | JP 6119201 B2 | 26-04-2017 |
| | | JP 2014095787 A | 22-05-2014 |
| | | US 2014126590 A1 | 08-05-2014 |
| | | US 2016006999 A1 | 07-01-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014095787 A